(19) Europäisches Patentamt
European Patent Office
Office européen des brevets

(11) **EP 3 492 426 B1**

(12) **FASCICULE DE BREVET EUROPEEN**

(45) Date de publication et mention de la délivrance du brevet:
**08.07.2020 Bulletin 2020/28**

(51) Int Cl.:
*C01B 25/45* (2006.01)          *C01B 33/32* (2006.01)
*H01M 4/58* (2010.01)           *H01M 4/62* (2006.01)
*H01M 10/052* (2010.01)        *H01M 4/136* (2010.01)
*H01M 4/36* (2006.01)

(21) Numéro de dépôt: **18208654.6**

(22) Date de dépôt: **27.11.2018**

(54) **MATÉRIAU SILICATE PHOSPHATE DE STRUCTURE CRISTALLOGRAPHIQUE OLIVINE**

PHOSPHAT-SILIKAT-MATERIAL MIT OLIVIN-KRISTALLSTRUKTUR

PHOSPHATE SILICATE MATERIAL WITH OLIVINE CRYSTALLOGRAPHIC STRUCTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.11.2017 FR 1761473**

(43) Date de publication de la demande:
**05.06.2019 Bulletin 2019/23**

(73) Titulaire: **Commissariat à l'Energie Atomique et aux Energies Alternatives
75015 Paris (FR)**

(72) Inventeurs:
- **DUCROS, Jean-Baptiste**
  **38054 Grenoble Cedex 09 (FR)**
- **LEFEVRE, Guillaume**
  **38054 Grenoble Cedex 09 (FR)**
- **MARTINET, Sébastien**
  **38054 Grenoble Cedex 09 (FR)**
- **MOHAMED, Nourhan**
  **38054 Grenoble Cedex 09 (FR)**

(74) Mandataire: **Nony
11 rue Saint-Georges
75009 Paris (FR)**

(56) Documents cités:
**WO-A1-2012/061934        US-A- 6 085 015
US-A1- 2003 170 542**

- **ZHANG S ET AL: "Li2+xMn1-xPxSi1-xO4/C as novel cathode materials for lithium ion b", ELECTROCHIMICA ACTA, vol. 107, 27 juin 2013 (2013-06-27), pages 406-412, XP028728704, ISSN: 0013-4686, DOI: 10.1016/J.ELECTACTA.2013.06.064**
- **C. DENG ET AL: "Facile One-Pot Synthesis of Li1-xFe1+xP1-xSixO4/C Nanocomposites with Enhanced Electrochemical Performance", JOURNAL OF THE ELECTROCHEMICAL SOCIETY, vol. 160, no. 2, 30 novembre 2012 (2012-11-30), pages A218-A222, XP055484678, ISSN: 0013-4651, DOI: 10.1149/2.045302jes**

**Description**

La présente invention concerne un matériau silicaté et phosphaté, et de structure cristallographique olivine, destiné notamment à une batterie, plus particulièrement à une batterie lithium-ion ou à une batterie potassium-ion ou à une batterie sodium-ion, ainsi qu'à un procédé de fabrication d'un tel matériau.

Les matériaux polyanioniques cristallins sont des matériaux d'intérêt pour l'industrie des batteries, en particulier des batteries lithium-ion. Toutefois, à ce jour, à la connaissance des inventeurs, seul le phosphate de fer lithié $LiFePO_4$ est commercialisé. A la différence d'autres matériaux pour électrode positive de batterie tels que les oxydes lamellaires et les spinelles, les matériaux polyanioniques présentent une structure stabilisée par la covalence du groupement anionique. Ils favorisent ainsi un fonctionnement fiable d'une batterie qui les comporte, limitant les risques d'emballement de la batterie par dégagement d'oxygène dans l'électrolyte. De tels matériaux sont par exemple décrits dans US 6,085,015, US 6,514,640 B1 et EP 1 134 826 A1.

Les phosphate, borate, sulfate, silicate ainsi que leur déclinaison pyro- et fluoro- sont des polyanions de base pour constituer de tels matériaux polyanioniques. Notamment, les matériaux polyanioniques comportant un groupement silicate, dits silicatés, apparaissent comme les plus intéressants dès lors que la sécurité de fonctionnement et la fiabilité de la batterie doivent être assurées.

Il est par exemple connu un matériau silicaté de formule $Li_2MSiO_4$, avec M étant un métal de transition choisi parmi le fer, le manganèse, le cobalt et le nickel. Un tel matériau silicaté est décrit par exemple dans US 2012/0227252 A1. La structure cristallographique de ces matériaux silicatés consiste en un empilement de tétraèdres de $LiO_4$, $MO_4$ et $SiO_4$. Ces silicates présentent une forte capacité spécifique théorique comprise entre 325 mAh/g et 333 mAh/g, environ deux fois supérieure aux capacités pratiques des oxydes mixtes tels que $LiCoO_2$, $LiNi_{0.8}Co_{0.15}Al_{0.05}O_2$ (NCA), $LiNi_{1/3}Co_{1/3}Mn_{1/3}O_2$ (NMC), $LiMnO_4$ (LMO) et le phosphate de fer lithié $LiFePO_4$.

Pour une utilisation à titre de cathode de batterie lithium-ion, le silicate $Li_2MnSiO_4$ est le plus adapté car il présente des potentiel d'insertion du lithium pour les couples $Mn^{2+}/Mn^{3+}$ et $Mn^{3+}/Mn^{4+}$ (respectivement de 4,1 V et 4,5V) tous deux plus faibles que le potentiel à partir duquel une dégradation des électrolytes organiques pour batterie lithium-ion est observé (4,6 V).

Cependant, lorsqu'il forme une cathode de batterie lithium-ion, le silicate $Li_2MnSiO_4$ s'amorphise brusquement dès la première charge, ce qui se traduit par une perte progressive des performances au cours de cycles de charge/décharge de la batterie.

Par ailleurs, bien que les propriétés du matériau de structure olivine et de formule $LiFeSiO_4$ aient déjà été prédites théoriquement, selon les inventeurs, sa fabrication n'a, jusqu'à présent, jamais été rapportée dans la littérature scientifique et technique. Par exemple, l'article « Is it possible to prepare olivine-type LiFeSiO4 ? A joint computational an experimental investigation », M.E. Arroyo y de Dompablo et al., Solid State Ionics, 179 (2008), 1758-1762, décrit des tentatives pour obtenir un silicate LiFeSiO4 de structure olivine ayant échouées.

Le matériau de structure olivine et de formule $LiMnSiO_4$ n'a quant à lui été reporté qu'au travers de modélisation de sa structure, mais sa fabrication n'a jamais été décrite dans la littérature scientifique et technique.

Enfin, on connaît par exemple de l'article « Synthesis of MgMnSiO4 and its applications as cathode material for magnesium battery », Jianzhi Sun et Zhen Jiang, J. New Mat. Electrochem. Systems, 17, 9-11 (2014), un matériau de formule $MgMnSiO_4$ et de structure cristallographique olivine de groupe d'espace *Pbnm* préparé par voie sol-gel suivie d'une pyrolyse. Le matériau décrit dans cet article scientifique est destiné à former une cathode d'une batterie magnésium-ion. Aucune utilisation de ce matériau à des fins de fabrication d'un matériau lithié n'est décrite.

Il existe donc un besoin pour un matériau cristallin présentant des performances électrochimiques adaptées à une application en tant qu'électrode d'une batterie lithium-ion ou d'une batterie potassium-ion ou d'une batterie sodium-ion, présentant de bonnes performances électrochimiques et qui conserve sa structure cristallographique au cours de cycles charge/décharge de la batterie.

Ce besoin est satisfait, selon un premier aspect de l'invention, au moyen d'un matériau de structure cristallographique olivine et de formule (I)

$$A_aZ_zM_m (SiO_4)_{1-x} (PO_4)_x$$

dans laquelle :

-     A est choisi parmi le lithium, le sodium, le potassium et leurs mélanges,
-     Z est choisi parmi le béryllium, le magnésium, le calcium, le strontium, le baryum et leurs mélanges,
-     M est choisi parmi le fer, le nickel, le cobalt, le manganèse, le chrome et leurs mélanges, le degré d'oxydation de l'élément M étant supérieur ou égal à 2 et inférieur à 4,
-     a, z, m et x sont les coefficients stœchiométriques des éléments chimiques A, Z, M et du groupement $PO_4^{3-}$

respectivement, et remplissent les conditions suivantes :

○

$$0 < a < 1 - \frac{x}{2},$$

○ $0 < x < 0,8,$

○ $0 < m,$

○

$$0 < z < 1 - \frac{x}{2},$$

et

○

$$a + z \leq 1 - \frac{x}{2}.$$

La structure cristallographique olivine du matériau de formule (I) favorise l'insertion et l'extraction de l'élément A. Le matériau de formule (I) est ainsi parfaitement adapté à former une cathode de batterie. L'élément A est en effet extrait de la cathode au cours de la charge et inséré dans la cathode au cours de la décharge de la batterie.

Le matériau de formule (I) présente d'excellentes propriétés électrochimiques. Notamment, la capacité spécifique d'une batterie dotée d'une cathode comportant le matériau de formule (I) est jusqu'à 35% supérieure à celle d'une batterie formée d'un matériau olivine de formule (I') qui diffère du matériau de formule (I) uniquement par le fait que $x$ = 0, *i.e.* qui contient le groupement $SiO_4^{4-}$ mais pas le groupement $PO_4^{3-}$.

En outre, la capacité spécifique du matériau de formule (I) reste stable au cours d'une succession de cycles charge/décharge.

Enfin, au sein d'une batterie, l'entité polyanionique $PO_4^{3-}$ assure que la structure olivine du matériau de formule (I) est conservée au cours des cycles de charge et de décharge. En particulier, les ions de l'élément M sont disposés dans des sites octaédriques de la structure olivine, ce qui assure une bonne stabilité de la structure olivine.

En outre, les inventeurs ont constaté que le groupement $PO_4^{3-}$ résulte en une augmentation des paramètres de maille a et b de la structure olivine par rapport au matériau de formule (I'), le paramètre de maille c restant constant. Sans être liés par une quelconque théorie, ils attribuent les excellentes propriétés électriques du matériau de formule (I) à une augmentation de la conductivité ionique résultant d'une mobilité accrue des ions de l'élément Z liée à un volume plus élevé de la maille élémentaire de la structure olivine.

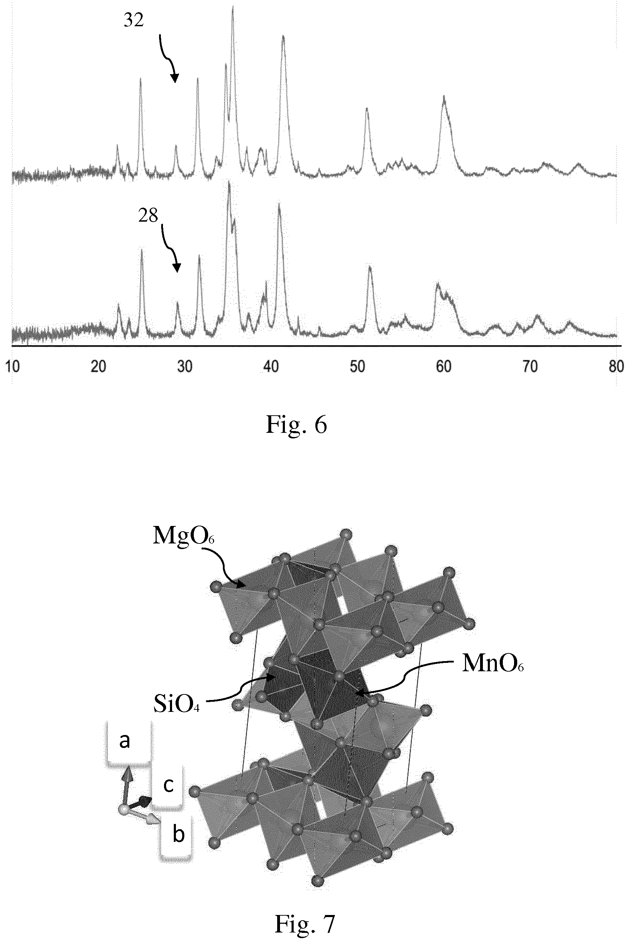

Une structure cristallographique « olivine » est une structure orthorhombique de groupe d'espace *Pnma.* A titre illustratif, la figure 7 représente, en perspective, la maille élémentaire du matériau de structure olivine et de formule $MgMnSiO_4$, les axes a, b et c de la maille élémentaire, ainsi que les positions relatives au sein de la maille élémentaires des groupements tétraédriques $SiO_4$, des groupements octaédriques $MgO_6$ et des groupements octaédriques $MnO_6$ qui composent le matériau.

Le matériau de formule (I) est notamment caractérisé en ce que le coefficient stœchiométrique $x$ est non nul. Le coefficient stœchiométrique $x$ peut être inférieur ou égal à 0,5, voire inférieur ou égal à 0,4, voire même inférieur ou égal à 0,25 et/ou supérieur ou égal à 0,05, voire supérieur ou égal à 0,15 ; en particulier, le coefficient stœchiométrique $x$ peut être égal à 0,2.

De préférence, la somme des coefficients stœchiométriques a + z + m est égale à $2 - \frac{x}{2}.$ Chaque site octaédrique de la structure cristallographique du matériau de formule (I) est alors occupé par l'un des éléments A, Z et M.

En particulier, les coefficients stœchiométriques a, z et m peuvent être tels que $z = 1 - a - \frac{x}{2}$ et/ou m = 1. De préférence, $z = 1 - a - \frac{x}{2}$ et m = 1. La capacité spécifique du matériau de formule (I) est alors optimale.

Le coefficient stœchiométrique a peut être supérieur à $0,1 \times \left(1 - \frac{x}{2}\right)$, voire supérieur à $0,5 \times \left(1 - \frac{x}{2}\right)$. De préférence, il est supérieur à $0,8 \times \left(1 - \frac{x}{2}\right)$ et/ou inférieur à $0,999 \times \left(1 - \frac{x}{2}\right)$. De préférence, il est compris entre $0,97 \times \left(1 - \frac{x}{2}\right)$ et $0,99 \times \left(1 - \frac{x}{2}\right)$. Par exemple, le coefficient stœchiométrique a peut être supérieur à 0,1, voire supérieur à 0,5, de préférence supérieur à 0,8 et/ou inférieur à 0,999. De préférence, est supérieur à 0,88 et inférieur à 0,89.

De préférence, le coefficient stœchiométrique z est inférieur à 1, de préférence inférieur à 0,5, de préférence inférieur à 0,1, de préférence inférieur à 0,05, mieux inférieur à 0,01. Le nombre de sites de la structure olivine accessible à l'élément A est alors augmenté, ce qui favorise l'obtention d'une capacité spécifique du produit élevée.

Le matériau de formule (I) est aussi caractérisé par le fait que le coefficient stœchiométrique z est non nul. Lorsque le matériau de formule (I) est obtenu par l'un des premier ou deuxième procédés de fabrication qui seront décrits par la suite, la caractéristique z > 0 est une signature desdits premier et deuxième procédés de fabrication. Par exemple, dans un mode de réalisation, z est supérieur à 0,01, voire supérieur à 0,05, voire même supérieur à 0,1. La présence de l'élément Z, même à l'état de traces, dans le matériau peut aisément être constatée par une analyse ICP (pour « *Inductively Coupled Plasma* » en anglais).

Pour ce qui concerne le coefficient stœchiométrique m, il est de préférence compris entre 0,9 et 1,1. De préférence, il est égal à 1,0.

De préférence, est le manganèse.

De préférence, Z est choisi parmi le magnésium, le calcium et leurs mélanges. De préférence, Z est le magnésium.

De préférence, A comporte, en pourcentage molaire exprimé sur le nombre total de moles de métal alcalin constituant A, plus de 90,0 % de lithium et/ou de sodium.

De préférence, A est constitué à plus de 99,0 % de lithium, en pourcentage molaire exprimé sur le nombre total de moles de métal alcalin constituant A. De préférence, A est le lithium. Un matériau à base de lithium présente les propriétés optimales pour former une batterie lithium ion.

Un matériau de formule (I) particulièrement préféré a pour formule $Li_a Mg_z Mn_m (SiO_4)_{1-x} (PO_4)_x$ dans laquelle, de préférence, x est compris entre 0,1 et 0,3, $0,85 \leq a + z \leq 0,95$, z < 0,05 et m est compris entre 0,98 et 1,02. De préférence, il a pour formule $Li_a Mg_z Mn (SiO_4)_{0,8} (PO_4)_{0,2}$ avec $a + z = 0,90$ et z < 0,05, de préférence z < 0,01.

L'invention concerne encore un matériau de structure cristallographique olivine et de formule (II)

$$Z_{z'} M_m (SiO_4)_{1-x} (PO_4)_x$$

dans laquelle les éléments chimiques Z et M ainsi que les coefficients stœchiométriques x et m sont tels que présentés dans la description du matériau de formule (I), les coefficients stœchiométriques z' et x étant en outre tels que

$$0 < z' \leq 1 - \frac{x}{2}.$$

Comme cela apparaîtra clairement par la suite, le matériau de formule (II) peut constituer un matériau de départ particulièrement bien adapté à la fabrication du matériau de formule (I).

De préférence, le coefficient stœchiométrique z' peut être supérieur ou égal à $0,1 \times \left(1 - \frac{x}{2}\right)$, voire supérieur ou égal à $0,5 \times \left(1 - \frac{x}{2}\right)$, voire supérieur ou égal à $0,8 \times \left(1 - \frac{x}{2}\right)$, voire même supérieur ou égal à $0,9 \times \left(1 - \frac{x}{2}\right)$. De préférence, le coefficient stœchiométrique z' est égal à $1 - \frac{x}{2}$.

De préférence, le matériau de formule (II) est $Mg_{1-\frac{x}{2}} Mn (SiO_4)_{1-x} (PO_4)_x$.

L'invention concerne encore un produit comportant pour plus de 50,0 % de sa masse, de préférence pour plus de 80,0% de sa masse, de préférence pour plus de 95,0 % de sa masse, voire pour 100,0% de sa masse, le matériau de formule (I) et/ou le matériau de formule (II), de préférence le matériau de formule (I) ou le matériau de formule (II).

Le produit peut se présenter sous des formes diverses. Par exemple, il peut se présenter sous la forme d'une poudre de particules primaires comportant pour plus de 95,0 %, de préférence pour plus de 99,0 % de leur masse, voire constituées par, le matériau de formule (I) et/ou le matériau de formule (II), de préférence le matériau de formule (I) ou le matériau de formule (II).

Notamment, plus de 90,0 % en nombre des particules primaires peuvent présenter une taille inférieure à 100 nm, par exemple inférieure à 50 nm, par exemple inférieure à 35 nm. La « taille » d'une particule primaire correspond au diamètre de ladite particule et peut être mesurée des images acquises en microscopie électronique à balayage. La conductivité électronique macroscopique du produit est alors améliorée. En outre, la surface spécifique de la particule est ainsi augmentée, augmentant ainsi la conductivité ionique du matériau et facilitant l'échange avec le milieu électrolytique lorsque le produit est disposé dans une batterie. De préférence encore, les particules primaires sont recouvertes, de préférence intégralement, par une couche de carbone, dont l'épaisseur est notamment inférieure à 10 nm, par exemple inférieure à 5 nm, par exemple comprise entre 2 nm et 3 nm, pour améliorer encore la conductivité électronique du produit.

Par ailleurs, les particules primaires peuvent être agrégées ou agglomérées entre elles, formant notamment des particules secondaires.

Le produit peut aussi se présenter sous la forme d'une électrode, en particulier une cathode de batterie. Notamment à cette fin, le produit peut se présenter sous la forme de particules constituées du matériau de formule (I) et/ou du matériau de formule (II) agglomérées entre elles par du carbone et/ou un liant, de type polymère. Par exemple, le produit peut comporter, une proportion massique du matériau de formule (I) et/ou du matériau de formule (II), de préférence du matériau de formule (I) ou du matériau de formule (II), supérieure à 50,0 %, voire supérieure à 80,0 %, très préférablement supérieure à 90,0 %, le complément étant constitué par du carbone et un liant polymère. L'électrode peut en outre comporter un collecteur de courant en aluminium sur une des faces duquel le produit est disposé.

Selon une première variante, le produit peut comporter pour plus de 50,0 % de sa masse, de préférence pour plus de 80,0% de sa masse, de préférence pour plus de 95,0% de sa masse, voire pour 100,0% de sa masse, le matériau de formule (I). Selon la première variante, le produit est par exemple destiné à former une cathode de batterie lithium-ion ou une cathode de batterie sodium-ion ou une cathode de batterie potassium-ion.

Selon une deuxième variante, le produit peut comporter pour plus de 50,0 % de sa masse, de préférence pour plus de 80,0% de sa masse, de préférence pour plus de 95,0% de sa masse, voire pour 100,0% de sa masse, le matériau de formule (II). Selon la deuxième variante, le produit est par exemple utile pour un accumulateur au magnésium ou à un accumulateur au calcium.

Par ailleurs, l'invention concerne un procédé de fabrication du matériau de formule (I), dénommé par la suite « premier procédé de fabrication », ledit procédé comprenant au moins les étapes successives consistant à :

a) disposer :

- du matériau de structure cristallographique olivine et de formule (II) dans laquelle les éléments chimiques Z, M ainsi que les coefficients stœchiométriques x et m sont tels que décrits dans la définition du matériau de formule (I), le coefficient stœchiométrique z' étant tel que $z' > z$, et
- d'un matériau alcalin comportant au moins un métal alcalin A choisi parmi le lithium, le sodium, le potassium et leurs mélanges,

b) maintenir un bain liquide comportant, de préférence constitué par, le matériau alcalin en fusion et le matériau de formule (II) à l'état solide, à une température de maintien et pendant une durée de maintien en température propices à l'insertion du métal alcalin A fourni par le matériau alcalin dans des sites libres de la structure cristallographique olivine du matériau de formule (II) de sorte à former le matériau de formule (I),
c) optionnellement, refroidissement du bain liquide, et
d) optionnellement, lavage puis séchage.

L'invention concerne encore un autre procédé de fabrication du matériau de formule (I), dénommé par la suite « deuxième procédé de fabrication », ledit autre procédé comprenant au moins les étapes consistant à :

i. disposer d'un matériau de structure cristallographique olivine et de formule (III) :

$$Z_zM_m(SiO_4)_{1-x}(PO_4)_{x'}$$

obtenu par oxydation du matériau de structure cristallographique olivine et de formule (II), les éléments chimiques Z et M ainsi que le coefficient stœchiométrique z du matériau de formule (III) et les coefficients stœchiométriques x et m des matériau de formule (II) et matériau de formule (III) étant tel que définis pour le matériau de formule (I), le coefficient stœchiométrique z' étant en outre tel que z' > z, et

ii. réduire électrochimiquement le matériau de formule (III) en présence d'une électrode source en élément chimique A dans des conditions propices à la formation du matériau de formule (I).

L'invention concerne un matériau de formule (I) obtenu par le premier procédé de fabrication ainsi qu'un matériau de formule (I) obtenu par le deuxième procédé de fabrication.

Par ailleurs, l'invention concerne un procédé de synthèse du matériau de formule (II), comportant les étapes de :

A) préparation d'une première solution par dilution, dans un premier solvant, d'un constituant silicaté et d'une deuxième solution par dilution, dans un deuxième solvant, d'un constituant comportant Z et d'un constituant comportant M,
la préparation de la première solution et/ou la préparation de la deuxième solution comportant la dilution dans le premier solvant, respectivement dans le deuxième solvant d'un constituant phosphaté,
B) mélange de la première solution avec la deuxième solution de manière à former un sol,
C) gélification du sol de sorte à former un gel,
D) pyrolyse du gel de manière à former le matériau de formule (II).

L'invention concerne encore un dispositif choisi parmi une cathode de batterie lithium-ion, une cathode de batterie sodium-ion, une cathode de batterie potassium-ion, une cathode de batterie lithium, une cathode de batterie sodium, une cathode de batterie potassium, une cathode de batterie calcium et une cathode de batterie magnésium, ladite cathode de batterie comportant le produit selon l'invention ou le matériau de formule (I) selon l'invention et/ou le matériau de formule (II).

Enfin, l'invention concerne une batterie, de préférence choisie parmi une batterie lithium-ion, une batterie sodium-ion, une batterie potassium-ion, une batterie lithium, une batterie sodium, une batterie potassium, une batterie calcium et une batterie magnésium, la batterie comportant une cathode de batterie selon l'invention. La batterie peut comporter une anode en un matériau choisi parmi l'étain, le germanium, l'antimoine et leurs alliages, le graphite, le silicium, un oxyde de silicium $SiO_v$, un oxyde d'étain $SnO_w$, un oxyde métallique de formule $D_rO_s$, communément appelé «matériau de conversion », avec D choisi parmi Fe, Mn, Co, Cu, Cr, Ni et leurs mélanges, et r/s variant selon la stœchiométrie dudit oxyde métallique, $Li_4Ti_5O_{12}$, et leurs mélanges.

D'autres avantages de l'invention apparaitront à la lecture de la description détaillée qui va suivre, et grâce au dessin annexé dans lequel :

- la figure 1 présente des photographies acquises en microscopie électronique à balayage d'exemples de matériau de formule (II) selon l'invention et hors invention,
- les figures 2 et 3 sont des diffractogrammes obtenus par diffraction des rayons X d'exemples de matériau de formule (II) selon l'invention et d'exemples de matériau hors invention dans lesquels l'intensité de diffraction, en unité arbitraire, est exprimée en fonction de l'angle $2\theta$ de diffraction,
- la figure 4 est un graphique représentant l'évolution de la capacité spécifique, en mAh/g de batteries comportant des cathodes formées à partir d'exemples de matériau de formule (II) et de matériau hors invention, en fonction du nombre de cycles de charge/décharge,
- la figure 5 est un graphique représentant l'évolution du potentiel, en V vs Li⁺/Li, en fonction de la capacité spécifique nette, en mAh/g, lors de la première décharge d'une batterie comportant un matériau de formule (II) selon l'invention préalablement oxydé, au cours d'une première charge au sein de la batterie, pour former un matériau de formule (III) selon l'étape i) du deuxième procédé selon l'invention, et lors de la décharge d'une batterie comportant un matériau hors invention,
- la figure 6 représente les diffractogrammes obtenus par diffraction des rayons X des exemples 4 et 5 du matériau de formule (II) selon l'invention dans lesquels l'intensité de diffraction, en unité arbitraire, est exprimée en fonction de l'angle $2\theta$ de diffraction, et
- la figure 7 représente une vue schématique tridimensionnelle d'une structure cristallographique olivine de groupe d'espace *Pnma*.

## PREMIER PROCEDE DE FABRICATION DU MATERIAU DE FORMULE (I)

Le matériau de formule (I) peut être obtenu par le premier procédé de fabrication qui est décrit ci-après.
A l'étape **a)** du premier procédé de fabrication, le matériau alcalin comporte au moins un métal alcalin A choisi parmi le lithium, le sodium, le potassium et leurs mélanges.

Pour fabriquer un matériau de formule (I) comportant du lithium, le matériau alcalin peut comporter un sel de lithium, de préférence choisi dans le groupe formé par $LiNO_3$, $LiCl$, $LiBr$, $LiI$, $Li_2CO_3$ et leurs mélanges. Par exemple, le matériau alcalin peut être un mélange de $LiNO_3$ et $LiCl$. En variante, le matériau alcalin peut en outre comporter un sel de sodium et/ou un sel de potassium, de préférence choisi dans le groupe formé par $KCl$, $NaCl$, $NaBr$, $KBr$, $NaI$, $KI$, $NaNO_3$, $KNO_3$, $Na_2CO_3$, $K_2CO_3$ et leurs mélanges. Par exemple, il peut être un mélange de $LiCl$ et $KCl$.

Pour fabriquer un matériau de formule (I) incluant du sodium, le matériau alcalin peut être un sel de sodium, de préférence choisi dans le groupe formé par $NaCl$, $NaBr$, $NaI$, $NaNO_3$, $Na_2CO_3$ et leurs mélanges. Par exemple, le matériau alcalin peut être un mélange de $NaNO_3$ et $NaCl$. En variante, le matériau alcalin peut en outre comporter un sel de potassium, par exemple choisi parmi $KCl$, $KBr$, $KI$, $KNO_3$, $K_2CO_3$ et leurs mélanges.

Pour fabriquer un matériau de formule (I) incluant du potassium, le matériau alcalin peut comporter un sel de potassium, de préférence choisi dans le groupe formé par $KBr$, $KCl$, $KI$, $KNO_3$, $K_2CO_3$ et leurs mélanges. Par exemple, le matériau alcalin peut être un mélange de $KNO_3$ et $KCl$.

Bien évidemment, pour fabriquer un matériau de formule (I) comportant plusieurs éléments chimiques choisis parmi le lithium, le sodium et le potassium, un mélange de sels de lithium et/ou de sodium et/ou de potassium tels que listés ci-dessus peut être préparé.

De préférence, le matériau alcalin est constitué par un mélange de sels formant une composition eutectique. Le matériau alcalin présente alors une température de fusion modérée, facilitant ainsi la mise en œuvre du premier procédé de fabrication.

Le matériau alcalin peut se présenter sous la forme d'une poudre constituée de particules. L'obtention d'une masse liquide comportant le matériau alcalin en fusion est ainsi facilitée.

Par ailleurs, le premier procédé de fabrication met en œuvre le matériau de structure cristallographique olivine et de formule (II) $Z_{z'}M_m(SiO_4)_{1-x}(PO_4)_x$ tel que décrit précédemment.

Le coefficient stœchiométrique z' est strictement positif et est supérieur au coefficient stœchiométrique z du matériau de formule (I) obtenu en fin d'étape b).

En particulier, le coefficient stœchiométrique z' peut être égal à la somme des coefficients z et a du matériau de formule (I).

Un bain liquide est formé, comportant, de préférence constitué par, le matériau alcalin en fusion et le matériau de formule (II) à l'état solide.

L'homme du métier sait aisément déterminer, sur la base de ses connaissances générales, les conditions permettant de former le bain liquide. A cette fin, il peut consulter l'ouvrage George J. Janz, 1967, « Molten Salts Handbook », Academic Press.

De préférence, le bain liquide est obtenu par fusion partielle d'une charge de départ constituée de particules formées du matériau alcalin et de particules formées du matériau de formule (II), et de préférence intimement mélangées. En particulier, le mélange du matériau alcalin et du matériau de formule (II) peut être réalisé au moyen d'un broyeur.

De préférence, la fusion partielle de la charge de départ est opérée à une température supérieure à la température de fusion du matériau alcalin et inférieure à la température de dégradation du matériau de formule (II).

Par « température de dégradation » d'un matériau, on entend la température à partir de laquelle le matériau subit une dégradation chimique et/ou structurelle, par exemple du fait d'une démixtion, d'un changement de phase, ou d'une amorphisation.

De préférence, la température de fusion du matériau alcalin est inférieure à la température de dégradation du matériau de formule (II), de préférence d'au moins 100°C, voire d'au moins 200°C.

Par exemple, lorsque le matériau alcalin est constitué par un mélange de $LiNO_3$ et $LiCl$, ou par un mélange de

$$Mg_{1-\frac{x}{2}}Mn(SiO_4)_{1-x}(PO_4)_x,$$

$LiCl$ et $KCl$, et le matériau de formule (II) est notamment $Mg_{0,9}Mn(SiO_4)_{0,8}(PO_4)_{0,2}$, la fusion partielle est opérée à une température comprise entre 200°C et 500°C.

De préférence, l'étape de mélange du matériau alcalin et du matériau de formule (II) formant la charge de départ est réalisée conjointement à l'étape de chauffage de la charge de départ pour former le bain liquide.

Dans une variante, afin de former le bain liquide, on peut chauffer le matériau alcalin dans un creuset jusqu'à l'obtention d'une masse liquide en fusion. Le matériau de formule (II) peut alors être mélangé avec la masse liquide pour former le bain liquide. Par exemple, le matériau de formule (II) peut être versé dans le moule contenant la masse liquide. Alternativement, la masse liquide peut être versée dans un moule contenant le matériau de formule (II).

A l'étape b), le bain liquide est maintenu à une température de maintien et pendant une durée de maintien en température propices à la formation d'un matériau de structure cristallographique olivine et de formule (I) $A_aZ_zM_m(SiO_4)_{1-x}(PO_4)_x$.

L'homme du métier sait aisément déterminer, sur la base de ses connaissances générales, les durée et temps de maintien nécessaires. A cette fin, il peut consulter l'ouvrage de C.N.R. Rao et Kanishka Biswas, « Essentials of Inorganic Materials Synthesis », John Wiley & Sons, 20 avr. 2015.

La fusion de la charge de départ et/ou le maintien en température du bain liquide peut être réalisée au moyen de tout type de four. Par exemple, un four à moufle ou un four tubulaire comportant un moule en quartz, porcelaine, alumine, zircone ou platine peut être utilisé.

De préférence, la température de maintien est supérieure à la température de fusion du matériau alcalin et inférieure à la température de dégradation du matériau de formule (II). De préférence, elle est supérieure d'au moins 10°C à la température de fusion du matériau alcalin et/ou inférieure d'au moins 10°C à la température de dégradation du matériau de formule (II).

La durée de maintien en température est de préférence comprise entre cinq minutes et cinq jours.

Par exemple, lorsque le matériau alcalin est constitué par un mélange de $LiNO_3$ et LiCl, ou par un mélange de LiCl et KCl, et le deuxième matériau est $Mg_{1-\frac{x}{2}}Mn(SiO_4)_{1-x}(PO_4)_x$, notamment $Mg_{0,9}Mn(SiO_4)_{0,8}(PO_4)_{0,2}$, la température de maintien est comprise entre 200°C et 500°C, et la durée de maintien en température est comprise entre 2 heures et 2 jours.

A l'étape **c),** le bain liquide est refroidi jusqu'à ce qu'un bain solidifié soit formé, de préférence jusqu'à une température inférieure à 40°C. Le bain solidifié comporte alors le matériau de formule (I) ainsi que des composés reliquats du processus de diffusion de l'étape b).

Le bain solidifié peut être lavé, à l'étape **d),** de sorte à séparer le matériau de formule (I) des composés reliquats. Le lavage peut notamment être effectué avec de l'eau ou de l'éthanol. Le matériau de formule (I) ainsi lavé peut ensuite être séché, par exemple sous vide, à une température supérieure à 60°C et/ou pendant une durée d'au moins 12 heures.

## DEUXIEME PROCEDE DE FABRICATION DU MATERIAU DE FORMULE (I)

Alternativement au premier procédé de fabrication décrit précédemment, un deuxième procédé de fabrication peut être mis en œuvre pour fabriquer le matériau de formule (I).

A l'étape **i),** on dispose d'un matériau de structure cristallographique olivine et de formule (III) $Z_zM_m(SiO_4)_{1-x}(PO_4)_x$ obtenu par oxydation du matériau de structure cristallographique olivine de formule (II) $Z_{z'}M_m(SiO_4)_{1-x}(PO_4)_x$. Bien évidemment, le coefficient stœchiométrique z' du matériau de formule (II) est supérieur au coefficient stœchiométrique z des matériaux de formules (I) et (III).

Selon un premier mode de mise en œuvre, le matériau de formule (III) peut être, préalablement à sa réduction en étape **ii),** généré par oxydation électrochimique de l'élément M constitutif du matériau de formule (II). Par réaction, et notamment oxydation et réduction, « électrochimique », on considère une réaction d'oxydo-réduction mettant en jeu un transfert électronique, et réalisée au moyen d'une cellule électrochimique dotée classiquement d'une électrode de travail, d'une contre-électrode, d'un milieu électrolytique, et optionnellement d'un séparateur.

L'homme du métier sait classiquement et aisément déterminer, sur la base de ses connaissances générales, les conditions d'oxydoréduction nécessaires à l'obtention du matériau de formule (III) à partir du matériau de formule (II). A cette fin, il peut consulter l'ouvrage David Linden, Thomas B. Reddy, « Handbook of batteries», 3rd edition, 2002, McGraw-Hill.

De préférence, l'oxydation électrochimique est réalisée au moyen d'un milieu électrolytique comprenant une source en élément A. Par exemple, la concentration molaire de l'élément A dans le milieu électrolytique peut être d'environ 1 mol.$1^{-1}$.

En particulier, le milieu électrolytique mis en œuvre pour l'étape de réduction électrochimique peut être identique au milieu électrolytique mis en œuvre pour l'étape d'oxydation électrochimique.

Par exemple, l'élément A est le lithium et le milieu électrolytique comprend une source du lithium, en particulier sous la forme d'un composé choisi parmi l'hexafluorophosphate de lithium $LiPF_6$, le perchlorate de lithium $LiClO_4$, l'arsenate de lithium $LiAsO_4$, le tétrafluoroboate de lithium $LiBF_4$, le bis-trifluoromethanesulfonimide de lithium LiTFSI, le bis(oxalato)borate de lithium LiBOB, le bis(fluorosulfonyl)imide de lithium LiFSI, l'hexafluoroarsenate de lithium $LiAsF_6$, le triflate de lithium $LiSO_3CF_3$, le trifluoroacetate de lithium $LiCF_3CO_2$, l'hexafluoroantimonate de lithium $LiSbF_6$, $LiN(CF_3SO_2)_3$, $LiN(C_2F_5SO_2)$, et leurs mélanges.

Par ailleurs, l'électrolyte peut comporter, par exemple à titre de solvant, un carbonate, choisi par exemple parmi l'éthyl- carbonate, le diéthyl- carbonate, l'éthyl-méthyl- carbonate, le diméthyl- carbonate, le carbonate de propylène et leurs mélanges. De préférence, la source en élément A, par exemple en lithium, est dissoute dans le carbonate.

De préférence, le matériau de formule (II) est oxydé en tant qu'électrode de travail face à une contre-électrode. Ainsi, l'extraction des ions $Z^{2+}$ du matériau de formule (II) est optimale.

Le matériau de formule (III) $Z_zM_m(SiO_4)_{1-x}(PO_4)_x$ est de structure cristallographique olivine. Toutefois, il est caractérisé par le fait que la structure cristallographique olivine présente des sites inoccupés, notamment par l'élément Z. Une caractéristique du deuxième procédé de fabrication réside, au cours de l'étape ii) de réduction électrochimique, en l'insertion dans les sites inoccupés de la structure olivine d'un ou plusieurs métaux alcalins A, de sorte à obtenir le matériau selon l'invention de formule (I) $A_aZ_zM_m(SiO_4)_{1-x}(PO_4)_x$.

L'électrode peut se présenter sous la forme de particules du matériau de formule (II) constitué de particules primaires, de préférence d'une taille inférieure à 100 nm, de préférence de taille inférieure à 50 nm, de préférence inférieure à 35 nm, et de préférence recouvertes, de préférence intégralement par une couche de carbone, d'une épaisseur de préférence inférieure à 10 nm, de préférence inférieure à 5 nm, par exemple comprise entre 2 et 3 nm. Les particules peuvent notamment être liées entre elles par une matrice carbonée, pour améliorer la conduction électrique au sein de l'électrode et un par un liant polymère pour assurer la cohésion et la tenue mécanique de l'électrode.

Par exemple, la contre électrode est en un matériau comportant l'élément A. De préférence, pour fabriquer un matériau de formule (I) avec A étant Li et/ou Na et/ou K, la contre électrode est en un matériau en Li et/ou Na et/ou K respectivement, sous forme métallique.

En particulier, au cours de l'oxydation électrochimique, le métal de transition M peut s'oxyder de l'état +2 à l'état +4 et l'ion $Z^{2+}$ est extrait de la structure, selon la demi-équation d'oxydoréduction suivante :

$$Z_{z'}M_m(SiO_4)_{1-x}(PO_4)_x \rightarrow Z_zM_m(SiO_4)_{1-x}(PO_4)_x + 2(z'-z)e^- + (z'-z)Z^{2+}$$

L'oxydation électrochimique peut être effectuée selon différents modes, par exemple à courant constant, à tension constante, à courant croissant imposé, à tension croissante imposée. La température de l'électrolyte peut être comprise entre 20°C et 60°C. L'oxydation électrochimique est effectuée selon un régime C/y, avec y compris entre 5 et 100, par exemple égal à 20. Un régime C/y correspond à une charge effectuée en y heures. Par exemple un régime C/20 correspond à une charge en 20 heures.

Après réalisation de la réaction d'oxydation électrochimique, le produit de formule (III) obtenu peut être lavé puis séché.

Selon un deuxième mode de réalisation alternatif, le matériau de formule (III) peut être, préalablement à sa réduction en étape **ii),** généré par oxydation chimique du matériau de formule (II). Par oxydation chimique, on considère ici une réaction ne nécessitant aucune activation électronique contrairement à une oxydation électrochimique.

De préférence, l'oxydation chimique met en œuvre au moins un composé oxydant dont le potentiel d'oxydo-réduction est supérieur au potentiel d'oxydoréduction du couple $M^{2+}/M^{3+}$ et/ou du couple $M^{3+}/M^{4+}$ de l'élément M constitutif du matériau de formule (II).

Le composé oxydant peut notamment être choisi parmi le tétrafluoroborate de nitronium $NO_2BF_4$, le persulfate de potassium $K_2S_2O_8$, l'hexafluorophosphate de nitrosonium $NO_2PF_6$, le tétrafluoroborate de nitrosonium $NOBF_4$, le péroxyde d'hydrogène $H_2O_2$ et leurs mélanges.

De préférence l'oxydation chimique est réalisée au sein d'un bain d'oxydation liquide contenant au moins ledit matériau de formule (II) et ledit composé oxydant et dans des conditions propices à l'extraction de l'élément Z dudit matériau de formule (II) pour former ledit matériau de formule (III) attendu.

L'homme du métier sait aisément déterminer, sur la base de ses connaissances générales, de telles conditions, notamment la température. A cette fin, il peut consulter l'article de A. R. Wizansky, P. E. Rauch, F. J. Disalvo, J. Solid State Chem. 81, 1989, 203-207.

Par exemple, le bain d'oxydation peut comporter de l'acétonitrile et la réaction d'oxydation chimique peut être effectuée à une température de 60°C sous reflux pendant une durée égale à 48 heures.

A titre illustratif, l'oxydation chimique du matériau de formule (II) avec le tétrafluoroborate de nitronium $NO_2BF_4$, qui présente un potentiel de 5,1V contre le couple $Li^+/Li$ s'effectue selon la réaction suivante :

$$Z_{z'}M_m(SiO_4)_{1-x}(PO_4)_x + 2(z'-z)NO_2BF_4 \rightarrow Z_zM_m(SiO_4)_{1-x}(PO_4)_x + 2(z'-z)NO_2(g) + (z'-z)Z(BF_4)_2$$

Après réalisation de l'oxydation chimique, le matériau de formule (III) obtenu peut être lavé puis séché.

En variante, selon le deuxième procédé de fabrication, qu'il soit obtenu par échange chimique ou par échange électrochimique, le matériau de formule (III) peut être réduit électrochimiquement en présence d'une électrode source en élément A dans des conditions propices à la formation d'un matériau de formule (I).

L'homme du métier sait classiquement et aisément déterminer, sur la base de ses connaissances générales, les conditions d'oxydoréduction nécessaires à l'obtention du matériau de formule (I) à partir du matériau de formule (III). A cette fin, il peut consulter l'ouvrage David Linden, Thomas B. Reddy, Handbook of batteries, 3rd edition, 2002, McGraw-Hill.

En particulier pour réaliser la réduction électrochimique en étape ii), le matériau de formule (III) peut former tout ou partie d'une électrode.

L'électrode peut se présenter sous la forme de particules du matériau de formule (III), de préférence d'une taille inférieure à 100 nm, de préférence de taille inférieure à 50 nm, de préférence inférieure à 35 nm, et de préférence recouvertes, de préférence intégralement par une couche de carbone, d'une épaisseur de préférence inférieure à 10 nm, voire inférieure à 5 nm, notamment comprise entre 2 nm et 3 nm. Les particules peuvent notamment être liées entre elles par une matrice carbonée, pour améliorer la conduction électrique au sein de l'électrode et un par un liant polymère pour assurer la cohésion et la tenue mécanique de l'électrode.

De préférence, la réduction électrochimique met aussi en œuvre une contre-électrode en un matériau comportant l'élément A. De préférence, pour fabriquer un matériau de formule (I) avec A étant Li et/ou Na et/ou K, la contre électrode est en un matériau en Li et/ou Na et/ou K, respectivement, sous forme métallique.

De préférence, la réduction électrochimique est réalisée au moyen d'un milieu électrolytique comprenant une source en élément A. Par exemple, la concentration molaire de l'élément A dans le milieu électrolytique peut être d'environ 1 mol.l$^{-1}$.

En particulier, le milieu électrolytique mis en œuvre pour l'étape de réduction électrochimique en étape **ii)** peut être identique au milieu électrolytique mis en œuvre pour l'étape d'oxydation électrochimique en étape **i).**

L'homme du métier sait choisir de manière routinière une source en élément A telle qu'au cours de l'étape **ii)** de réduction électrochimique, l'ion de l'élément A soit disponible pour être inséré dans les sites accessibles de la structure olivine du matériau de formule (III) afin de former le matériau de formule (I).

Par exemple, l'élément A est le lithium et le milieu électrolytique comprend une source du lithium, en particulier sous la forme d'un composé choisi parmi l'hexafluorophosphate de lithium LiPF$_6$, le perchlorate de lithium LiClO$_4$, l'arsenate de lithium LiAsO$_4$, le tétrafluoroboate de lithium LiBF$_4$, le bis-trifluoromethanesulfonimide de lithium LiTFSI, le bis(oxalato)borate de lithium (LiBOB), le bis(fluorosulfonyl)imide de lithium (LiFSI), l'hexafluoroarsenate de lithium (LiAsF$_6$), le triflate de lithium (LiSO$_3$CF$_3$), le trifluoroacetate de lithium (LiCF$_3$CO$_2$), l'hexafluoroantimonate de lithium (LiSbF6), LiN(CF$_3$SO$_2$)$_3$, LiN(C$_2$F$_5$SO$_2$), et leurs mélanges.

Par ailleurs, l'électrolyte peut comporter un carbonate, choisi par exemple parmi l'éthyl- carbonate, le diéthyl-carbonate, l'éthyl- méthyl- carbonate, le diméthyl-carbonate, le carbonate de propylène et leurs mélanges. De préférence, la source en élément A, par exemple en lithium, est dissoute dans le carbonate.

De préférence, lorsque le matériau de formule (III) est préparé par oxydation électrochimique, l'électrode et la contre-électrode à la fin de l'étape de réaction d'oxydation électrochimique peuvent constituer l'électrode et la contre-électrode respectivement au début de l'étape de réduction électrochimique. La température de l'électrolyte peut être comprise entre 20°C et 60°C. L'oxydation électrochimique est effectuée selon un régime C/y, avec y compris entre 5 et 100, par exemple égal à 20. Un tel régime est particulièrement adapté à l'insertion des ions de l'élément A dans la structure olivine du matériau de formule (III).

L'étape de réduction électrochimique peut être mise en œuvre à courant constant, tension constante, courant décroissant imposé, tension décroissante imposée. Elle n'est toutefois pas limitée à ce mode de mise en œuvre.

## PROCEDE DE SYNTHESE DU MATERIAU DE FORMULE (II)

Le matériau de formule (II) peut être obtenu par le procédé de synthèse qui est détaillé ci-après.

A l'étape **A)**, on prépare une première solution par dilution, dans un premier solvant, d'un constituant silicaté.

Le premier solvant peut être un solvant polaire, par exemple choisi parmi un alcool, un solvant aqueux, notamment de l'eau, le diméthylformamide, communément dénommé DMF, le diméthylsulfoxyde, communément dénommé DMSO, le tétrahydrofurane, communément dénommé THF, un éther et leurs mélanges. De préférence, le premier solvant est un alcool, de préférence de l'éthanol.

De préférence, le rapport du nombre de moles de premier solvant sur le nombre de moles du constituant silicaté, est compris entre 35 et 45, de préférence compris entre 30 et 42, notamment égal à 41.

Le constituant silicaté est de préférence un alcoxyde de silicium, de formule générale Si(OR)$_n$, R étant un groupement organique et $0 < n \leq 4$, de préférence n > 2 et de préférence n = 4. En particulier, le constituant silicaté peut être le tétraéthyl-orthosilicate de formule $C_8H_{20}SiO_4$.

Par ailleurs, en vue d'obtenir des particules primaires recouvertes d'une couche de carbone telle que décrites ci-dessus, la préparation de la première solution à l'étape a) peut comporter la dilution dans le premier solvant d'un composé carboné.

De préférence, la teneur en composant carboné est comprise entre 5 % et 25 %, par exemple égale à 10 %, en pourcentages massiques exprimés sur la base de la masse du constituant comportant Z, du constituant comportant M, du constituant phosphaté, du constituant silicaté et du composant carboné.

De préférence, le composé carboné est choisi parmi le glucose, le sucrose, l'alcool polyvinylique, communément dénommé PVA, le polyvinylpyrrolidone, communément dénommé PVP, un tensioactif anionique, un tensioactif cationique, un tensioactif zwitterionique ou un tensioactif neutre. De préférence, le composé carboné est choisi de sorte à présenter un rendement carbone non nul, de sorte qu'après l'étape d) de pyrolyse, une couche carbonée soit formée et recouvre les particules primaires formées. De préférence, le composant carboné est un poloxamère, de préférence le poly(éthylène glycol)-*b*-poly(propylène glycol)-*b*-poly(éthylène glycol)-*b*.

Selon une variante, la préparation de la première solution et de la deuxième solution peut être exempte du composé carboné. La gélification du sol à l'étape C) est ainsi accélérée et les surfaces des particules primaires du matériau de formule (II) obtenues en fin d'étape D) ne sont recouvertes d'aucun revêtement carboné.

De préférence, la concentration en constituant silicaté dans le premier solvant est déterminée de sorte que plus de 99,0 %, de préférence 100 % de la masse du constituant silicaté est dissoute totalement au sein de la première solution.

Par ailleurs, à l'étape A), la préparation de la première solution et/ou la préparation de la deuxième solution comporte la dilution dans le premier solvant, respectivement dans le deuxième solvant d'un constituant phosphaté.

De préférence, la concentration en constituant phosphaté est déterminée de sorte que plus de 99,0 %, de préférence 100 % de la masse du constituant phosphaté est dissoute totalement au sein de la première solution et/ou de la deuxième solution. A cette fin, lorsque le constituant phosphaté est au moins partiellement dissous dans le premier solvant, la quantité de premier solvant peut être adaptée à la quantité de constituant phosphaté. Notamment, la quantité de premier solvant croit de préférence avec une augmentation de la quantité de constituant phosphaté. De préférence, dans une variante où le premier solvant est de l'éthanol et le constituant phosphaté est et le triéthylphosphate, le rapport molaire de la quantité de premier solvant sur la quantité de constituant phosphaté est supérieur ou égal à 150. Par exemple, pour fabriquer le matériau de formule (II) avec x=0,2 $Mg_{0,9}Mn(SiO_4)_{0,8}(PO_4)_{0,2}$ avec de l'éthanol et du triéthylphosphate, le rapport molaire de la quantité de premier solvant sur la quantité de constituant phosphaté peut être égal à 150, et pour fabriquer le matériau de formule (II) avec x=0,5 $Mg_{0,75}Mn(SiO_4)_{0,5}(PO_4)_{0,5}$, le rapport molaire de la quantité de premier solvant sur la quantité de constituant phosphaté peut être égal à 174.

De préférence, dans la variante où le premier solvant est de l'éthanol, le constituant phosphaté est et le triéthylphosphate et le constituant silicaté est le tétraéthyl-orthosilicate, le rapport molaire de la quantité de premier solvant sur la somme de la quantité de constituant phosphaté et de constituant silicaté est supérieur ou égal à 40 et inférieur ou égal à 90.

Dans un mode de mise en œuvre préféré, le constituant phosphaté est dilué uniquement dans le premier solvant. Autrement dit, selon ledit mode de mise en œuvre, la deuxième solution est exempte du constituant phosphaté. Le produit ainsi obtenu est particulièrement pur, et peut comporter pour plus de 99,0 %, voire plus de 99,9 % de sa masse le matériau de formule (I). Le produit peut comporter, à titre de complément, des impuretés, notamment (*Mg, Mn*)*O* et *Mn₂P*.

Préalablement à l'introduction du constituant phosphaté dans le premier solvant et/ou dans le deuxième solvant, le procédé peut comporter une étape d'hydrolyse du constituant phosphaté, par exemple dans l'eau et pendant une durée de 24 heures.

Le constituant phosphaté est de préférence choisi dans le groupe formé par $P_4O_{10}$, $P_2O_5$, $H_3PO_4$, un alkyl phosphate tel que $OP(OR)_u(OH)_{3-u}$, avec u = 1, 2 ou 3 et R un groupement organique, et leurs mélanges. De préférence, le constituant phosphaté est le triéthyl-phosphate de formule $C_6H_{15}PO_4$.

A l'étape A), on prépare en outre une deuxième solution par dissolution, dans un deuxième solvant, d'un constituant comportant Z et d'un constituant comportant M.

Le deuxième solvant peut être un solvant polaire, par exemple choisi parmi un alcool, un solvant aqueux, notamment de l'eau et leurs mélanges. De préférence, le deuxième solvant est aqueux, de préférence est de l'eau.

De préférence, le constituant comportant Z est un sel inorganique choisi parmi un oxalate, un citrate, un acétate, un sulfate, un nitrate et leurs mélanges. Le constituant comportant Z peut être choisi parmi $Z(C_2H_3O_2)_{u'}.n'H_2O$, $Z(C_2O_4)_{u'}.n'H_2O$, $Z(NO_3)_{u'}.n'H_2O$, $Z(SO_4)_{u'}.n'H_2O$, $Z(C_6H_4O_7)_{u'}.n'H_2O$ avec u' compris entre 1 et 2 et n' compris entre 0 et 10, et leurs mélanges.

De préférence, le constituant comportant M est un sel inorganique choisi parmi un oxalate, un citrate, un acétate, un sulfate, un nitrate et leurs mélanges. Le constituant comportant M peut être choisi parmi $M(C_2H_3O_2)_{u''}.n'H_2O$, $M(C_2O_4)_{u''}.n''H_2O$, $M(NO_3)_{u''}.n''H_2O$, $M(SO_4)_{u''}.n''H_2O$, $M(C_6H_4O_7)_{u''}.n''H_2O$ avec u'' compris entre 1 et 4 et n'' compris entre 0 et 10, et leurs mélanges.

Dans un mode de mise en œuvre préféré du procédé de synthèse:

- Z est le magnésium Mg et le constituant comportant Mg est l'acétate de magnésium hydraté de formule $Mg(CH_3COO)_2.4H_2O$, et
- M est le manganèse Mn et le constituant comportant Mn est l'acétate de manganèse hydraté de formule $Mn(CH_3COO)_2.4H_2O$

De préférence, la concentration en constituant comportant M et la concentration en constituant comportant Z dans le deuxième solvant sont déterminées de sorte que plus de 99,0 %, de préférence 100 % de la masse du constituant comportant M et plus de 99,0 %, de préférence 100 % de la masse du constituant comportant Z respectivement, sont dissoutes totalement au sein de la deuxième solution.

En vue d'obtenir des particules primaires faites du matériau de formule (II) recouvertes d'une couche de carbone telle que décrites ci-dessus, la préparation de la deuxième solution à l'étape A) peut comporter la dilution dans le deuxième solvant du composé carboné décrit ci-dessus.

De préférence, les concentrations en composant carboné dans le premier solvant et/ou dans le deuxième solvant sont déterminées de sorte que plus de 99,0 %, de préférence 100 % de la masse du composant carboné respectivement, sont dissoutes totalement au sein de la première solution, respectivement de la deuxième solution.

Par ailleurs, à l'étape A), pour accélérer la cinétique de gélification du sol à l'étape C), on dissout de préférence un catalyseur dans le premier solvant ou de préférence dans le deuxième solvant. Le catalyseur peut comporter, voire consister en un acide, notamment choisi parmi HCl, $HNO_3$, $H_2SO_4$, un acide carboxylique et leurs mélanges. En variante, il peut comporter, voire consister en une base, notamment choisie parmi $NH_3$, $NH_4OH$, NaOH et leurs mélanges. Selon une autre variante, le catalyseur peut être un agent nucléophile, par exemple choisi parmi KF, $NH_4F$ et leurs mélanges. De préférence le catalyseur comporte, voire est constitué d'acide acétique.

De préférence, la première solution et/ou la deuxième solution sont agitées chacune pendant une durée supérieure à 1 heure, notamment supérieure à 5 heures, par exemple de 6 heures.

A l'étape **B),** on mélange la première solution avec la deuxième solution de manière à former un sol. De préférence, on verse la deuxième solution dans un récipient contenant la première solution de sorte à former le sol. Le mélange à l'étape B) peut être opéré au moyen d'un agitateur, notamment magnétique, afin d'obtenir une solution homogène.

L'étape **C)** de gélification est poursuivie durant une durée de gélification assurant la formation d'un gel à partir du sol. Par gel, on entend un corps présentant une contrainte minimale en dessous de laquelle le corps ne s'écoule pas, contrairement au sol, sauf à avoir été soumis, préalablement à l'application de la contrainte, à une autre sollicitation mécanique.

De préférence, aucune sollicitation mécanique autre que la gravité n'est appliquée sur le sol au cours de la gélification.

La gélification du sol peut être opérée à une température comprise entre la température de fusion et la température d'ébullition du solvant utilisé. De préférence, la gélification du sol est opérée à une température comprise entre 5°C et 95°C, de préférence entre 20°C et 40°C, de préférence à température ambiante, pendant une durée de l'étape de gélification comprise entre 5 heures et 50 jours, de préférence entre 12 heures et 30 jours, de préférence entre 12 heures et 10 jours. La durée de gélification peut varier notamment en fonction de la présence ou de l'absence de composant carboné dans la première solution.

Par ailleurs, le procédé peut comporter une étape **C')** optionnelle, successive, notamment consécutive, à l'étape C) et préalable à l'étape D) de pyrolyse, l'étape C') consistant à sécher le gel. De préférence, le séchage du gel à l'étape C') est effectué à une température comprise entre 60 et 120 °C et/ou pendant une durée de séchage de 10 jours au plus, et de préférence d'au moins 1 heure, par exemple à 80°C pendant une durée de 7 jours. Le séchage peut être effectué dans un four, sous air ou sous un flux d'un gaz neutre, par exemple de l'argon.

Le gel, éventuellement séché à l'étape C'), est ensuite pyrolysé à l'étape **D)** de sorte qu'en fin d'étape D), on obtient le produit selon l'invention.

L'étape D) de pyrolyse peut être conduite dans un four, notamment un four à tube.

De préférence, le gel, éventuellement séché à l'étape C'), est pyrolysé à une température de pyrolyse comprise entre 600 °C et 1200 °C et pendant une durée comprise entre 30 minutes et 2 jours, et de préférence sous atmosphère neutre, par exemple sous argon. En particulier, le gel peut être porté à la température de pyrolyse à une vitesse de chauffe comprise entre 0,5 °C/min et 20 °C/min. En variante, le gel peut être pyrolysé au moyen d'un traitement thermique de type « flash », selon lequel la vitesse de chauffe est supérieure à 100 °C/min, voire supérieure à 1000 °C/min.

Le procédé peut en outre comporter une étape de refroidissement E), successive à l'étape D) de pyrolyse, au cours de laquelle on refroidit le produit obtenu en fin d'étape D), la vitesse de refroidissement étant de préférence comprise entre 0,5 °C/min et 20 °C/min.

## EXEMPLES

Les exemples non limitatifs suivants sont donnés dans le but d'illustrer l'invention.

Dans les exemples, on a employé les matières premières suivantes :

- de l'acétate de magnésium commercialisé par la société Sigma Aldrich,
- de l'acétate de manganèse commercialisé par la société Sigma Aldrich,
- du tétraéthyl-orthosilicate (TEOS) commercialisé par la société Sigma Aldrich,
- du triéthyl-phosphate (TEP) commercialisé par la société Sigma Aldrich,
- du Poly(ethylene glycol)-block-poly(propylene glycol)-block-poly(ethylene glycol) ou PEG-PPG-PEG commercialisé par la société Sigma Aldrich.

Par ailleurs, les analyses de diffraction par rayon X ont été réalisées au moyen d'un diffractomètre D8 Advance de marque Bruker, et les tailles des particules primaires des poudres des exemples ont été mesurées au moyen d'images obtenues avec un microscope électronique à balayage LEO 1530 de marque Zeiss.

Exemple 1 hors invention

Dans un premier bécher, 15 g de PEG-PPG-PEG sont dissous dans 50 ml d'éthanol, sous agitation magnétique. Le bécher est clos lors de l'agitation. Une fois la solution ainsi agitée et devenue homogène, on y ajoute 4,17g de TEOS de sorte à former une première solution. On agite ensuite la première solution au moyen d'un agitateur magnétique pendant 30 minutes.

Dans un deuxième bécher, 1 ml d'acide acétique est mélangé dans 13,5 g d'eau, puis 4,27 g d'acétate de magnésium et 4,84 g d'acétate de manganèse sont ajoutés au mélange de sorte à former une deuxième solution. On agite ensuite la deuxième solution au moyen d'un agitateur magnétique pendant 30 minutes.

La deuxième solution contenue dans le deuxième bécher est versée dans le premier bécher. Le sol ainsi obtenu est agité pendant 6 heures.

Après cessation de l'agitation, un gel est formé dans le premier bécher par gélification du sol après une durée de 4 jours à température ambiante de 25 °C.

Le gel est ensuite transféré dans un four où il est séché à une température de 80°C pendant une durée de 7 jours, sous air.

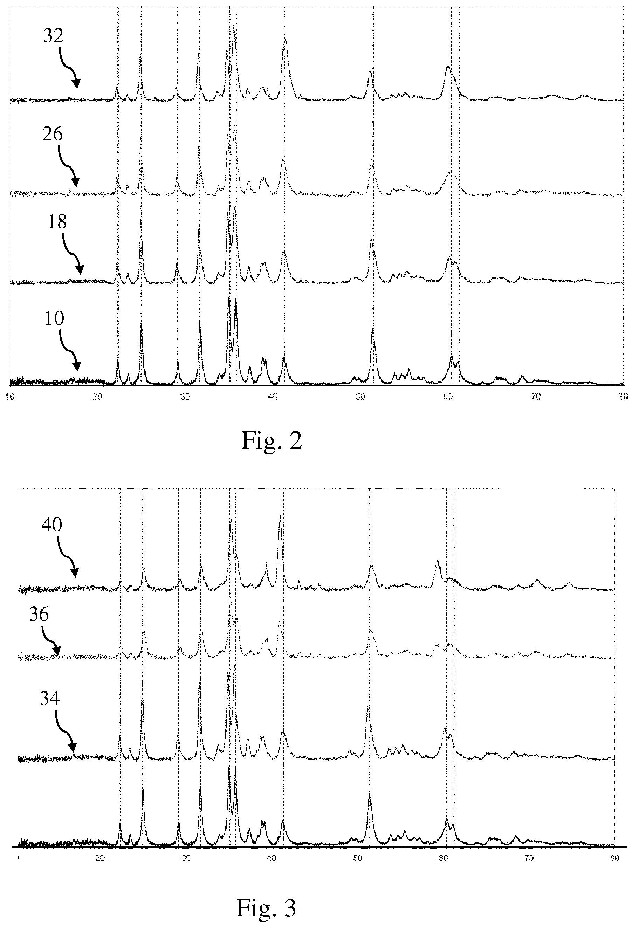

Le gel obtenu après séchage est transféré dans un four tubulaire où il est porté à une température de pyrolyse de 900°C à une vitesse de montée en température de 5°C par minute. Il est maintenu sous argon à la température de pyrolyse pendant 24 heures. Après pyrolyse et refroidissement à une vitesse de 5 °C par minute, un produit 5 est obtenu qui est formé de particules primaires 7 de $MgMnSiO_4$, d'une taille comprise entre 20 nm et 30 nm, comme cela peut être observé sur la figure la). Une analyse par diffraction de rayons X de la poudre confirme que le matériau $MgMnSiO_4$ cristallise dans le système orthorhombique de groupe d'espace *Pnma,* comme cela est confirmé par le diffractogramme 10 de la figure 2. Il présente les paramètres de maille suivants : a=10,4556 Å, b=6,1296 Å et c=4,8102 Å.

Une encre est ensuite préparée en mélangeant, en pourcentage en masse, 10 % de carbone super P-C65, 10 % de difluorure de polyvinylidène (PVDF) et 80 % de la poudre de particules. L'encre est enduite sur un feuillard d'aluminium puis est séchée sous vide à 60°C pendant 24 heures. Une électrode est ensuite découpée dans le feuillard d'aluminium recouvert de l'encre ayant séchée. L'électrode est ensuite pressée, puis est séchée sous vide à 80°C pendant 48 heures. Une batterie se présentant sous la forme d'une pile bouton au format CR2032 est fabriquée et comporte l'électrode formant cathode sous la forme d'une pastille de 14 mm de diamètre, et une contre-électrode de lithium (Li) métallique formant anode, sous la forme d'une pastille de 16 mm de diamètre. L'électrode et la contre-électrode sont serties ensemble et logées dans un boîtier métallique. Un séparateur, constitué d'une membrane de marque Viledon de référence FS 2207-2- DA WA et d'une membrane Celgard 2400, est disposé entre l'électrode et la contre-électrode. Les électrodes, contre-électrode et séparateur sont immergés dans un électrolyte liquide constitué d'un solvant formé de trois parts égales de éthyl-carbonate, diéthyl- carbonate et éthyl- méthyl- carbonate, dans lequel est dissous de l'hexafluorophosphate de lithium ($LiPF_6$) à une concentration de 1 mol/l.

La batterie est soumise à 41 cycles formés d'une charge galvanostatique suivie d'une décharge galvanostatique, imposés à 25°C entre un potentiel de 1,5 V et 4,5 V vs Li à :

- un régime de C/10 pendant les 23 premiers cycles, puis à
- un régime de C/5 pendant les 3 premiers cycles suivants, puis à
- un régime de 2C/5 pendant les 3 premiers cycles suivants, puis à
- un régime de 2C pendant les 3 premiers cycles suivants, puis à
- un régime de 4C pendant les 3 premiers cycles suivants, puis à
- un régime de 10C pendant les 3 premiers cycles suivants, puis à
- un régime de C/10 pendant les 3 derniers cycles.

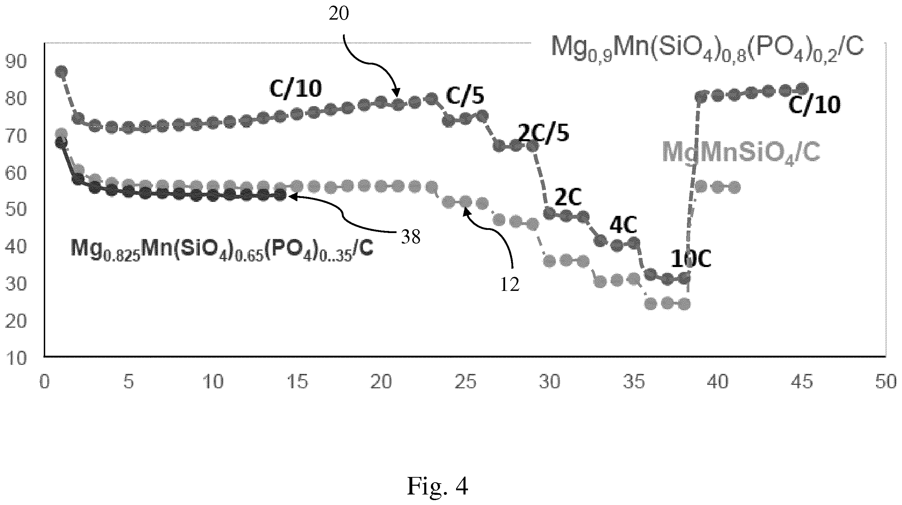

L'évolution 12 de la capacité spécifique de décharge du produit de l'exemple 1, exprimée en mAh/g en fonction du nombre de cycles N, est illustrée sur la figure 4.

Exemple 2 selon l'invention

L'exemple 2 diffère de l'exemple 1 en ce que dans le premier bécher, 7,5 g de PEG-PPG-PEG, 1,67 g de TEOS et 0,36 g de TEP préalablement hydrolysé dans 2,1 g d'eau pendant 24 heures, sont dissous dans 40 ml d'éthanol, sous agitation pendant 30 minutes, de manière à former une première solution.

En outre, dans un deuxième bécher, 0,5 ml d'acide acétique est mélangé dans 4,7 g d'eau, puis 1,92 g d'acétate de magnésium et 2,42 g d'acétate de manganèse sont ajoutés au mélange de sorte à former une deuxième solution. On agite ensuite la deuxième solution au moyen d'un agitateur magnétique pendant 30 minutes.

Les autres étapes du procédé sont identiques à celles de l'exemple 1.

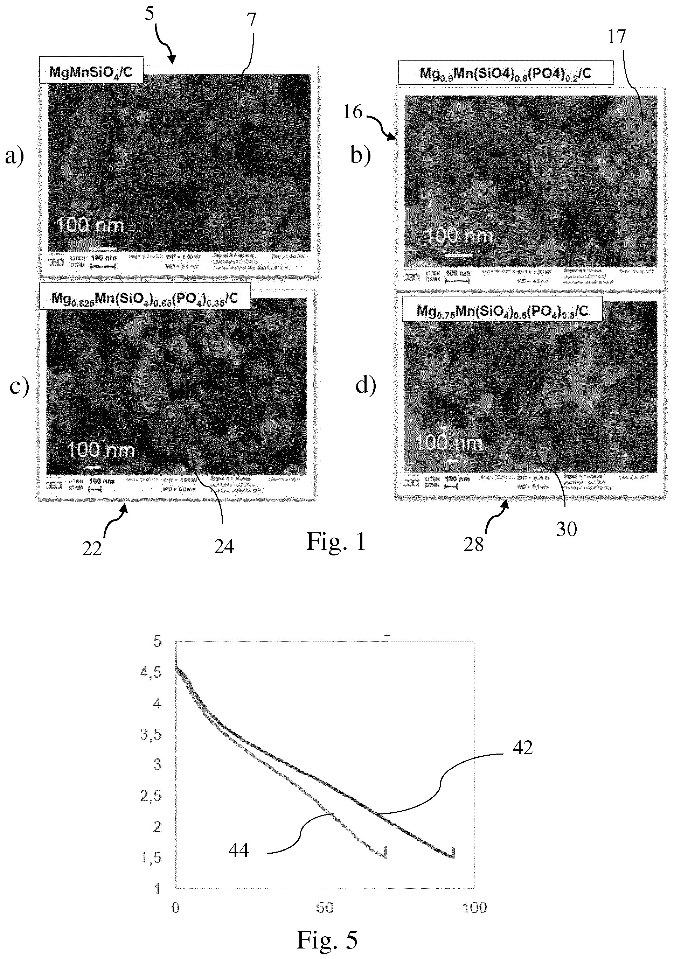

Après pyrolyse, un produit 16 est obtenu qui est formé de particules primaires 17 de $Mg_{0,9}Mn(SiO_4)_{0,8}(PO_4)_{0,2}$, d'une taille comprise entre 20 nm et 30 nm, comme observé sur la figure 1b). Une analyse par diffraction de rayons X de la poudre confirme que $Mg_{0,9}Mn(SiO_4)_{0,8}(PO_4)_{0,2}$ cristallise dans le système orthorhombique de groupe d'espace *Pnma,* comme cela est confirmé par le diffractogramme 18 de la figure 2. Il présente les paramètres de maille suivants : a=10,4703 Å, b=6,1406 Å et c=4,7953 Å. Enfin, les impuretés dans le produit de l'exemple 2 ne sont pas détectables par diffraction de rayons X.

Une électrode et une batterie sous forme d'une pile bouton sont ensuite préparées au moyen de la poudre de particules de l'exemple 2 selon le protocole décrit à l'exemple 1, à ceci près que l'encre enduite sur le feuillard d'aluminium est séchée à une température de 80 °C.

La batterie est soumise à 45 cycles formés d'une charge galvanostatique suivie d'une décharge galvanostatique, imposés à 25°C entre un potentiel de 1,5 V et 4,5 V vs Li à :

- un régime de C/10 pendant les 23 premiers cycles, puis à
- un régime de C/5 pendant les 3 premiers cycles suivants, puis à
- un régime de 2C/5 pendant les 3 premiers cycles suivants, puis à
- un régime de 2C pendant les 3 premiers cycles suivants, puis à
- un régime de 4C pendant les 3 premiers cycles suivants, puis à
- un régime de 10C pendant les 3 premiers cycles suivants, puis à
- un régime de C/10 pendant les 7 derniers cycles.

L'évolution 20 de la capacité spécifique de décharge du produit de l'exemple 2 est illustrée sur la figure 4.

Au cours de la première charge galvanostatique, *i.e.* correspondant à une étape d'oxydation du produit, un matériau de formule (III) selon l'invention $Mg_zMn(SiO_4)_{0,8}(PO_4)_{0,2}$ est formé, z diminuant en fonction du potentiel, avec $0 < z < 0,9$. La mesure de la capacité spécifique du produit au cours de la première charge confirme l'oxydation du matériau de formule (II) en matériau de formule (III).

Après avoir effectué le premier cycle galvanostatique, *i.e.* correspondant à une étape d'oxydation suivie d'une étape de réduction, puis au cours des cycles suivants, un matériau de formule (I) selon l'invention $Li_aMg_zMn(SiO_4)_{0,8}(PO_4)_{0,2}$ est formé avec a et z variant en fonction du potentiel, avec $0<a<0,9$, $0<z<0,9$ et $0<a+z\leq0,9$. La mesure de la capacité spécifique du produit au cours de la première décharge confirme la réduction du matériau de formule (III) en matériau de formule (I).

L'homme du métier sait aisément déterminer les conditions pour obtenir le matériau avec des valeurs de a et z spécifiques. En particulier, il peut choisir un régime galvanostatique de charge/décharge adapté à la cinétique de mobilité des cations. Dans l'exemple 2, au cours du premier cycle galvanostatique, le régime choisi est C/10 à une température de cyclage de 25°C. Le régime peut être augmenté ou diminué, notamment conjointement avec une diminution ou une augmentation respective de la température de cyclage, qui est par exemple comprise entre -20°C et 80°C.

Exemple 3 selon l'invention

L'exemple 3 diffère de l'exemple 1 en ce que dans le premier bécher, 7,5 g de PEG-PPG-PEG, 1,35 g de TEOS et 0,64 g de TEP préalablement hydrolysé dans 2,1 g d'eau pendant 24 heures sont dissous dans 40 ml d'éthanol, sous agitation pendant 30 minutes, de manière à former une première solution.

En outre, dans un deuxième bécher, 0,5 ml d'acide acétique est mélangé dans 4,7 g d'eau, puis 1,76 g d'acétate de magnésium et 2,42 g d'acétate de manganèse sont ajoutés au mélange de sorte à former une deuxième solution. On agite ensuite la deuxième solution au moyen d'un agitateur magnétique.

Les autres étapes du procédé sont identiques à celles de l'exemple 2.

Après pyrolyse, un produit 22 est obtenu qui est formé de particules primaires 24 de $Mg_{0,825}Mn(SiO_4)_{0,65}(PO_4)_{0,35}$, d'une taille comprise entre 20 nm et 30 nm, comme observé sur la figure 1c). Une analyse par diffraction de rayons X de la poudre confirme que $Mg_{0,825}Mn(SiO_4)_{0,65}(PO_4)_{0,35}$ cristallise dans le système orthorhombique de groupe d'espace *Pnma,* comme cela est confirmé par le diffractogramme 26 de la figure 2. Il présente les paramètres de maille suivants : a=10,4908 Å, b=6,1581 Å et c=4,8109 Å. Enfin, les impuretés dans le produit de l'exemple 3 ne sont pas détectables par diffraction de rayons X.

Exemple 4 selon l'invention

L'exemple 4 diffère de l'exemple 1 en ce que dans le premier bécher, 7,5 g de PEG-PPG-PEG, 1,04 g de TEOS et 0,91 g de TEP préalablement hydrolysé dans 2,1 g d'eau pendant 24 heures, sont dissous dans 40 ml d'éthanol, sous agitation pendant 30 minutes, de manière à former une première solution.

En outre, dans un deuxième bécher, 0,5 ml d'acide acétique est mélangé dans 4,7 g d'eau, puis 1,60 g d'acétate de magnésium et 2,42 g d'acétate de manganèse sont ajoutés au mélange de sorte à former une deuxième solution. On agite ensuite la deuxième solution au moyen d'un agitateur magnétique.

Les autres étapes du procédé sont identiques à celles de l'exemple 2.

Après pyrolyse, un produit est obtenu comportant un matériau de formule $Mg_{0,75}Mn(SiO_4)_{0,5}(PO_4)_{0,5}$ qui cristallise dans le système orthorhombique de groupe d'espace *Pnma,* comme cela est confirmé par le diffractogramme 28 de la figure 4. Le produit comporte en outre des impuretés $(Mg,Mn)O$ et $Mn_2P$, comme cela est visible sur le diffractogramme 28.

Exemple 5 selon l'invention

L'exemple 5 diffère de l'exemple 1 en ce que dans le premier bécher, 7,5 g de PEG-PPG-PEG, 1,04 g de TEOS et 0,91 g de TEP préalablement hydrolysé dans 2,1 g d'eau pendant 24 heures, sont dissous dans 50 ml d'éthanol, sous agitation pendant 30 minutes, de manière à former une première solution.

En outre, dans un deuxième bécher, 0,5 ml d'acide acétique est mélangé dans 4,7 g d'eau, puis 1,60 g d'acétate de magnésium et 2,42 g d'acétate de manganèse sont ajoutés au mélange de sorte à former une deuxième solution. On agite ensuite la deuxième solution au moyen d'un agitateur magnétique.

Les autres étapes du procédé sont identiques à celles de l'exemple 2.

Après pyrolyse, un produit 28 est obtenu qui est formé de particules primaires 30 de $Mg_{0,75}Mn(SiO_4)_{0,5}(PO_4)_{0,5}$, d'une taille comprise entre 20 nm et 30 nm, comme observé sur la figure 1d). Une analyse par diffraction de rayons X de la poudre confirme que $Mg_{0,75}Mn(SiO_4)_{0,5}(PO_4)_{0,5}$ cristallise dans le système orthorhombique de groupe d'espace *Pnma,* comme cela est confirmé par le diffractogramme 32 représenté sur les figures 2 et 6. Il présente les paramètres de maille suivants : a=10,5306 Å, b=6,1691 Å et c=4,8008 Å. Enfin, les impuretés dans le produit de l'exemple 5 ne sont pas détectables par diffraction de rayons X.

Exemple 6 selon l'invention

L'exemple 6 diffère de l'exemple 1 en ce que dans le premier bécher, 7,5 g de PEG-PPG-PEG et 1,67 g de TEOS sont dissous dans 40 ml d'éthanol, sous agitation pendant 30 minutes, et dans le deuxième bécher, 1,92 g d'acétate de magnésium, 2,42 g d'acétate de manganèse, 0,5 ml d'acide acétique et 0,36 g de TEP préalablement hydrolysé dans 2,1 g d'eau pendant 24h sont dissous, sous agitation pendant 30 minutes dans 4,7 g d'eau, de sorte à former une deuxième solution. Les autres étapes du procédé sont identiques à celles de l'exemple 2.

Après pyrolyse, un produit est obtenu qui est formé de particules primaires de $Mg_{0,9}Mn(SiO_4)_{0,8}(PO_4)_{0,2}$, d'une taille comprise entre 20 et 30 nm. Une analyse par diffraction de rayons X de la poudre confirme que $Mg_{0,9}Mn(SiO_4)_{0,8}(PO_4)_{0,2}$ cristallise dans le système orthorhombique de groupe d'espace *Pnma,* comme cela est confirmé par le diffractogramme 34 de la figure 3. Le produit comporte des impuretés $(Mg,Mn)O$ et $Mn_2P$.

Exemple 7 selon l'invention

L'exemple 7 diffère de l'exemple 1 en ce que dans le premier bécher, 7,5 g de PEG-PPG-PEG et 1,35 g de TEOS sont dissous dans 40 ml d'éthanol, sous agitation pendant 30 minutes, et dans le deuxième bécher, 1,76 g d'acétate de magnésium, 2,42 g d'acétate de manganèse, 0,5 ml d'acide acétique et 0,64 g de TEP, préalablement hydrolysé dans 2,1 g d'eau pendant 24h sous agitation magnétique, sont dissous sous agitation pendant 30 minutes dans 4,7 g d'eau, de sorte à former une deuxième solution. Les autres étapes du procédé sont identiques à celles de l'exemple 2.

Après pyrolyse, un produit est obtenu qui est formé de particules primaires de $Mg_{0,825}Mn(SiO_4)_{0,65}(PO_4)_{0,35}$, d'une taille comprise entre 20 et 30 nm. Une analyse par diffraction de rayons X de la poudre confirme que $Mg_{0,825}Mn(SiO_4)_{0,65}(PO_4)_{0,35}$ cristallise dans le système orthorhombique de groupe d'espace *Pnma,* comme cela est confirmé par le diffractogramme 36 de la figure 3. Le produit comporte des impuretés $(Mg,Mn)O$ et $Mn_2P$.

Une électrode et une batterie sont ensuite préparées au moyen de la poudre de particules selon le protocole décrit à l'exemple 1.

La batterie est soumise à 14 cycles formés d'une charge galvanostatique suivie d'une décharge galvanostatique, imposés à 25°C entre un potentiel de 1,5 V et 4,5 V vs Li à un régime de C/10.

Au cours de la première charge galvanostatique, *i.e.* correspondant à une étape d'oxydation du produit, un matériau de formule (III) selon l'invention $Mg_zMn(SiO_4)_{0,65}(PO_4)_{0,35}$ est formé, z diminuant en fonction du potentiel, avec $0<z<0,825$.

Après avoir effectué le premier cycle galvanostatique, *i.e.* correspondant à une étape d'oxydation suivie d'une étape de réduction, puis au cours des cycles suivants, un matériau de formule (I) selon l'invention

$Li_aMg_zMn(SiO_4)_{0,65}(PO_4)_{0,35}$ est formé, a et z variant en fonction du potentiel, avec $0<a<0,825$, $0<z<0,825$ et $0<a+z\leq0,825$.

L'évolution 38 de la capacité spécifique de décharge du produit de l'exemple 7 est illustrée sur la figure 4.

Exemple 8 selon l'invention

L'exemple 8 diffère de l'exemple 1 en ce que dans le premier bécher, 7,5 g de PEG-PPG-PEG et 1,04 g de TEOS sont dissous dans 40 ml d'éthanol, sous agitation pendant 30 minutes, et dans le deuxième bécher, 1,60 g d'acétate de magnésium, 2,42 g d'acétate de manganèse, 0,5 ml d'acide acétique et 0,91 g de TEP, préalablement hydrolysé dans 2,1g d'eau pendant 24h sous agitation magnétique, sont dissous, sous agitation pendant 30 minutes dans 4,7 g d'eau, de sorte à former une deuxième solution. Les autres étapes du procédé sont identiques à celles de l'exemple 2.

Après pyrolyse, un produit est obtenu qui est formé de particules primaires de $Mg_{0,75}Mn(SiO_4)_{0,5}(PO_4)_{0,5}$, d'une taille comprise entre 20 et 30 nm. Une analyse par diffraction de rayons X de la poudre confirme que $Mg_{0,75}Mn(SiO_4)_{0,5}(PO_4)_{0,5}$ cristallise dans le système orthorhombique de groupe d'espace *Pnma*, comme cela est confirmé par le diffractogramme 40 de la figure 3. Le produit comporte des impuretés (Mg,Mn)O et $Mn_2P$.

Les exemples 1 à 8 sont notamment caractérisés par le fait que le sol, formé par mélange des première et deuxième solutions, présentent:

- un rapport du nombre de moles d'eau sur la somme du nombre de moles de TEOS et du nombre de moles de TEP égal à 38,
- un rapport du nombre de moles d'acide acétique sur la somme du nombre de moles de TEOS et du nombre de moles de TEP égal à 0,874,
- un rapport du nombre de moles d'éthanol sur la somme du nombre de moles de moles de TEOS et du nombre de moles de TEP compris entre 43 et 87, respectivement égal 43 pour l'exemple 1, égal à 69 pour les exemples 2 à 4 et 6 à 8 et égal à 87 pour l'exemple 5, et
- un rapport du nombre de moles d'éthanol sur le nombre de moles de TEP compris entre 139 et 347, respectivement égal à 347 pour les exemples 2 et 6, égal à 198 pour les exemples 3 et 7, égal à 139 pour les exemples 4 et 8 et égal à 174 pour l'exemple 5.

Les exemples 1 à 8 ont été préparés au moyen d'un composé carboné sous la forme de PEG-PPG-PEG. En variante, ils peuvent être préparés sans apport dudit composé carboné.

La comparaison des exemples 2 et 6, 3 et 7, 4 et 8, et 4 et 5 respectivement permet d'établir les constats suivants. La dissolution du TEP dans l'éthanol pour former la première solution au lieu d'une dissolution du TEP dans l'eau pour former la deuxième solution, et un rapport élevé du nombre de moles d'éthanol sur le nombre de moles de TEP dans le sol résulte en un produit présentant une teneur en impuretés particulièrement faible. Les exemples 2, 3 et 5 sont donc préférés aux exemples 4, 6, 7 et 8.

Par ailleurs, en ce qui concerne les propriétés électrochimiques du produit selon l'invention, la batterie comportant le produit de l'exemple 2 présente une capacité à la décharge 20, pour un même type de régime de charge/décharge, toujours supérieure à celle 12 de la batterie comportant le silicate de magnésium manganèse $MgMnSiO_4$. Par exemple, après les 23 premiers cycles, la capacité à la décharge du produit de l'exemple 2 est de 80 mAh/g, soit plus de 37 % supérieure à celle de $MgMnSiO_4$, qui est égale à 58 mAh/g.

Lors de la première décharge, comme illustré sur la figure 5, la batterie comportant le produit de l'exemple 2 présente une capacité spécifique 42 jusqu'à 30 % supérieure à la capacité spécifique 41 de la batterie comportant le produit de l'exemple 1.

En outre, hormis une décroissance initiale au cours des quatre premiers cycles, la capacité à la décharge du produit de l'exemple 2 augmente avec le nombre de cycles pour un même régime de charge/décharge.

Le produit de l'exemple 2 est préféré.

En ce qui concerne le produit de l'exemple 7, la batterie le comportant présente une capacité de décharge sensiblement identique à celle à base du silicate de magnésium manganèse, bien que le matériau de l'exemple 2 présente une teneur en impuretés supérieure à celle du silicate de magnésium manganèse.

Bien entendu, l'invention n'est pas limitée aux modes de réalisation du produit et aux modes de mise en œuvre du procédé présentés dans la présente description.

Par ailleurs, sauf indication contraire, une inégalité du type « A supérieur à B », respectivement « A inférieur à B » est considérée strictement. Autrement dit, l'égalité entre A et B est exclue.

**Revendications**

1.  Matériau de structure cristallographique olivine et de formule (I)

    $$A_a Z_z M_m (SiO_4)_{1-x} (PO_4)_x$$

    dans laquelle :

    - A est choisi parmi le lithium, le sodium, le potassium et leurs mélanges,
    - Z est choisi parmi le béryllium, le magnésium, le calcium, le strontium, le baryum et leurs mélanges,
    - M est choisi parmi le fer, le nickel, le cobalt, le manganèse, le chrome et leurs mélanges, le degré d'oxydation de l'élément M étant supérieur ou égal à 2 et inférieur à 4,

    - a, z, m et x sont les coefficients stœchiométriques des éléments chimiques A, Z, M et du groupement $PO_4^{3-}$ respectivement, et remplissent les conditions suivantes :

    o

    $$0 < a < 1 - \frac{x}{2},$$

    o $0 < x < 0,8$,
    o $0 < m$,
    o

    $$0 < z < 1 - \frac{x}{2},$$

    et

    o

    $$a + z \le 1 - \frac{x}{2}.$$

2.  Matériau selon la revendication 1, dans lequel la somme des coefficients stœchiométriques a + z + m est égale à $2 - \frac{x}{2}$.

3.  Matériau selon l'une quelconque des revendications 1 et 2, dans lequel les coefficients stœchiométriques a, z et m sont tels que $z = 1 - a - \frac{x}{2}$ et/ou m = 1.

4.  Matériau selon l'une quelconque des revendications précédentes, dans lequel le coefficient stœchiométrique a est supérieur à $0,1 \times \left(1 - \frac{x}{2}\right)$, de préférence supérieur à $0,8 \times \left(1 - \frac{x}{2}\right)$.

5.  Matériau selon l'une quelconque des revendications précédentes, dans lequel A est constitué à plus de 99 % de lithium, en pourcentage molaire exprimé sur le nombre total de moles de métal alcalin constituant A, de préférence A est le lithium, et/ou Z est choisi parmi le magnésium, le calcium et leurs mélanges, de préférence est le magnésium, et/ou M est le manganèse.

6.  Matériau selon l'une quelconque des revendications précédentes, dans lequel z < 1, de préférence z < 0,5, de préférence z < 0,1, voire de préférence z < 0,05, mieux z < 0,01, et/ou
    x est inférieur ou égal à 0,5, voire inférieur ou égal à 0,4, voire même inférieur ou égal à 0,25 et/ou supérieur à 0,05, voire supérieur à 0,15, notamment égal à 0,2, et/ou m est compris entre 0,9 et 1,1, de préférence est égal à 1,0.

7. Produit comportant, pour plus de 50,0 % de sa masse, le matériau selon l'une quelconque des revendications précédentes, le produit se présentant de préférence sous la forme d'une poudre de particules primaires comportant pour plus de 95,0 % de leur masse le matériau selon l'une quelconque des revendications précédentes, plus de 90,0 % en nombre des particules primaires présentant une taille inférieure à 100 nm, par exemple inférieure à 50 nm, par exemple inférieure à 35 nm,

   les particules primaires étant de préférence agrégées ou agglomérées entre elles, formant notamment des particules secondaires,

   et/ou les particules primaires étant notamment recouvertes, de préférence intégralement, par une couche de carbone, dont l'épaisseur est notamment inférieure à 10 nm, par exemple inférieure à 5 nm, par exemple comprise entre 2 nm et 3 nm.

8. Dispositif choisi parmi une cathode de batterie lithium-ion, une cathode de batterie sodium-ion, une cathode de batterie potassium-ion, une cathode de batterie lithium, une cathode de batterie sodium et une cathode de batterie potassium, le dispositif comportant un produit selon la revendication 7 ou un matériau selon l'une quelconque des revendications 1 à 6.

9. Procédé de fabrication du matériau de formule (I) selon l'une quelconque des revendications 1 à 6, ledit procédé comprenant au moins les étapes consistant à :

   i. disposer d'un matériau de structure cristallographique olivine et de formule (III) :

   $$Z_z M_m (SiO_4)_{1-x} (PO_4)_x,$$

   obtenu par oxydation d'un matériau de structure cristallographique olivine et de formule (II) :

   $$Z_{z'} M_m (SiO_4)_{1-x} (PO_4)_x$$

   les éléments chimiques Z et M ainsi que le coefficient stœchiométrique z du matériau de formule (III) et les coefficients stœchiométriques x et m des matériau de formule (II) et matériau de formule (III) étant tels que définis dans l'une quelconque des revendications 1 à 6, les coefficients stœchiométriques z' et x étant tels que

   $$0 < z' \leq 1 - \frac{x}{2},$$ le coefficient stœchiométrique z' étant en outre tel que z' > z, et

   ii. réduire électrochimiquement ledit matériau de formule (III) en présence d'une électrode source en élément A dans des conditions propices à la formation du matériau de formule (I).

10. Procédé selon la revendication précédente, dans lequel le matériau de formule (II) forme tout ou partie d'une électrode.

11. Procédé selon l'une quelconque des revendications 9 et 10, dans lequel la réduction électrochimique est réalisée au moyen d'un milieu électrolytique comprenant une source en élément A, de préférence A étant le lithium, et ledit milieu électrolytique comprenant une source du lithium, en particulier sous la forme d'un composé choisi parmi l'hexafluorophosphate de lithium $LiPF_6$, le perchlorate de lithium $LiClO_4$, l'arsenate de lithium $LiAsO_4$, le tétrafluoroborate de lithium $LiBF_4$, le bis-trifluoromethanesulfonimide de lithium LiTFSI, le bis(oxalato)borate de lithium LiBOB, le bis(fluorosulfonyl)imide de lithium LiFSI, l'hexafluoroarsenate de lithium $LiAsF_6$, le triflate de lithium $LiSO_3CF_3$, le trifluoroacetate de lithium $LiCF_3CO_2$, l'hexafluoroantimonate de lithium $LiSbF_6$, $LiN(CF_3SO_2)_3$, $LiN(C_2F_5SO_2)$, et leurs mélanges.

12. Procédé selon l'une quelconque des revendications 9 à 11, dans lequel le matériau de formule (III) est, préalablement à sa réduction, généré par oxydation électrochimique de l'élément M constitutif dudit matériau de formule (II), ledit matériau de formule (II) étant de préférence oxydé en tant qu'électrode de travail face à une contre-électrode, l'oxydation du matériau de formule (II) en matériau de formule (III) et la réduction du matériau de formule (III) en matériau de formule (I) étant de préférence réalisées dans une même cellule électrochimique, et/ou l'oxydation du matériau de formule (II) en matériau de formule (III) et la réduction du matériau de formule (III) en matériau de formule (I) étant de préférence réalisées au niveau d'une unique électrode dont lesdits matériaux de formule (II) et (III) en sont consécutivement un composant.

13. Procédé selon l'une quelconque des revendications 9 à 11, dans lequel ledit matériau de formule (III) est au préalable généré par oxydation chimique du matériau de formule (II).

14. Procédé selon la revendication 13, dans lequel ladite oxydation chimique met en œuvre au moins un composé oxydant dont le potentiel d'oxydoréduction est supérieur au potentiel d'oxydoréduction du couple $M^{2+}/M^{3+}$ et/ou du couple $M^{3+}/M^{4+}$ de l'élément M constitutif dudit matériau de formule (II), le composé oxydant étant de préférence choisi parmi le tétrafluoroborate de nitronium $NO_2BF_4$, le persulfate de potassium $K_2S_2O_8$, l'hexafluorophosphate de nitrosonium $NO_2PF_6$, le tétrafluoroborate de nitrosonium $NOBF_4$, le péroxyde d'hydrogène $H_2O_2$ et leurs mélanges, et/ou ladite oxydation chimique est réalisée au sein d'un bain liquide contenant au moins ledit matériau de formule (II) et ledit composé oxydant et dans des conditions propices à l'extraction de l'élément Z dudit matériau de formule (II) pour former ledit matériau de formule (III) attendu.

15. Procédé de fabrication de fabrication du matériau de formule (I) selon l'une quelconque des revendications 1 à 6, ledit procédé comprenant au moins les étapes successives consistant à :

a) disposer :

- d'un matériau de structure cristallographique olivine et de formule (II)

$$Z_zM_m(SiO_4)_{1-x}(PO_4)_x$$

dans laquelle les éléments chimiques Z, M ainsi que les coefficients stœchiométriques x et m sont tels que définis dans l'une quelconque des revendications 1 à 6, les coefficients stœchiométriques z' et x étant tels que $0 < z' \leq 1 - \frac{x}{2}$, et le coefficient stœchiométrique z' étant tel que z'>z, et
- d'un matériau alcalin comportant au moins un métal alcalin A choisi parmi le lithium, le sodium, le potassium et leurs mélanges,

b) maintenir un bain liquide comportant, de préférence constitué par, le matériau alcalin en fusion et le matériau de formule (II) à l'état solide, à une température de maintien et pendant une durée de maintien en température propices à l'insertion du métal alcalin A fourni par le matériau alcalin dans des sites libres de la structure cristallographique olivine du matériau de formule (II) de sorte à former ledit matériau de formule (I),
c) optionnellement, refroidissement du bain liquide, et
d) optionnellement, lavage puis séchage.

16. Procédé selon la revendication précédente, dans lequel le bain liquide est obtenu par fusion partielle d'une charge de départ constituée de particules formées du matériau alcalin et de particules formées du matériau de formule (II), et de préférence intimement mélangées, la fusion partielle étant de préférence opérée à une température supérieure à la température de fusion du matériau alcalin et inférieure à la température de dégradation du matériau de formule (II).

17. Procédé selon l'une quelconque des revendications 15 et 16, dans lequel le matériau alcalin est un mélange de $LiNO_3$ et LiCl ou un mélange de LiCl et KCl.

**Patentansprüche**

1. Material mit kristallographischer Olivin-Struktur und der Formel (I)

$$A_aZ_zM_m (SiO_4)_{1-x}(PO_4)_x$$

in der:

- A aus Lithium, Natrium, Kalium und Mischungen davon ausgewählt ist,
- Z aus Beryllium, Magnesium, Calcium, Strontium, Barium und Mischungen davon ausgewählt ist,
- M aus Eisen, Nickel, Kobalt, Mangan, Chrom und Mischungen davon ausgewählt ist, wobei die Oxidationsstufe des Elements M größer oder gleich 2 und kleiner als 4 ist,
- a, z, m und x die stöchiometrischen Koeffizienten der chemischen Elemente A, Z, M bzw. der Gruppe $PO_4^{3-}$ sind und die folgenden Bedingungen erfüllen:

○

$$0 < a < 1 - \frac{x}{2},$$

○ 0 < x < 0,8,
○ 0 < m,
○

$$0 < z < 1 - \frac{x}{2}$$

und

○

$$a + z \leq 1 - \frac{x}{2}.$$

**2.** Material nach Anspruch 1, wobei die Summe der stöchiometrischen Koeffizienten a + z + m gleich $2 - \frac{x}{2}$ ist.

**3.** Material nach einem der Ansprüche 1 und 2, wobei die stöchiometrischen Koeffizienten a, z und m so beschaffen sind, dass $z = 1 - a - \frac{x}{2}$ und/oder m = 1.

**4.** Material nach einem der vorhergehenden Ansprüche, wobei der stöchiometrische Koeffizient a größer als $0,1 \times \left(1 - \frac{x}{2}\right)$ und vorzugsweise größer als $0,8 \times \left(1 - \frac{x}{2}\right)$ ist.

**5.** Material nach einem der vorhergehenden Ansprüche, wobei A in Molprozent, bezogen auf die Gesamtzahl von Molen des Alkalimetall-Bestandteils A, aus mehr als 99 % Lithium besteht, vorzugsweise A Lithium ist, und/oder Z aus Magnesium, Calcium und Mischungen davon ausgewählt ist, vorzugsweise Magnesium ist und/oder M Mangan ist.

**6.** Material nach einem der vorhergehenden Ansprüche, wobei z < 1, vorzugsweise z < 0,5, vorzugsweise z < 0,1, sogar bevorzugt z < 0,05, besser z < 0,01, und/oder
x kleiner oder gleich 0,5, sogar kleiner oder gleich 0,4, ja sogar kleiner oder gleich 0,25 und/oder größer als 0,05, sogar größer als 0,15, insbesondere gleich 0,2, ist und/oder
m zwischen 0,9 und 1,1 liegt und vorzugsweise gleich 1,0 ist.

**7.** Produkt, das zu mehr als 50,0 % seiner Masse das Material nach einem der vorhergehenden Ansprüche umfasst, wobei das Produkt vorzugsweise in Form eines Pulvers von Primärteilchen vorliegt, die zu mehr als 95,0 % ihrer Masse das Material nach einem der vorhergehenden Ansprüche umfassen, wobei mehr als 90,0 Zahlen-% der Primärteilchen eine Größe von weniger als 100 nm, beispielsweise weniger als 50 nm, beispielsweise weniger als 35 nm, aufweisen, wobei die Primärteilchen vorzugsweise miteinander aggregiert oder agglomeriert sind, wobei sie insbesondere Sekundärteilchen bilden,
und/oder die Primärteilchen insbesondere, vorzugsweise vollständig, mit einer Kohlenstoffschicht, die insbesondere eine Dicke von weniger als 10 nm, beispielsweise weniger als 5 nm, beispielsweise zwischen 2 nm und 3 nm, aufweist, bedeckt sind.

**8.** Vorrichtung, ausgewählt aus einer Kathode einer Lithium-Ionen-Batterie, einer Kathode einer Natrium-Ionen-Batterie, einer Kathode einer KaliumIonen-Batterie, einer Kathode einer Lithium-Batterie, einer Kathode einer Natrium-Batterie und einer Kathode einer Kalium-Batterie, wobei die Vorrichtung ein Produkt nach Anspruch 7 oder ein Material nach einem der Ansprüche 1 bis 6 umfasst.

**9.** Verfahren zur Herstellung des Materials der Formel (I) nach einem der Ansprüche 1 bis 6, wobei das Verfahren mindestens die folgenden Schritte umfasst, die aus Folgendem bestehen:

i. Bereitstellen eines durch Oxidation eines Materials mit kristallographischer Olivinstruktur und der Formel (II):

$$Z_{z'}M_m(SiO_4)_{1-x}(PO_4)_x$$

erhaltenen Materials mit kristallographischer Olivinstruktur und der Formel (III):

$$Z_zM_m(SiO_4)_{1-x}(PO_4)_{x'}$$

wobei die chemischen Elemente Z und M sowie der stöchiometrische Koeffizient z des Materials der Formel (III) und die stöchiometrischen Koeffizienten x und m des Materials der Formel (II) und des Materials der Formel (III) wie in einem der Ansprüche 1 bis 6 definiert sind, wobei die stöchiometrischen Koeffizienten z' und x so beschaffen sind, dass $0 < z' \leq 1 - \frac{x}{2}$, wobei der stöchiometrische Koeffizient z' außerdem so beschaffen ist, dass z' > z, und
ii. elektrochemisches Reduzieren des Materials der Formel (III) in Gegenwart einer Elektrode, die Quelle von Element A ist, unter Bedingungen, die zur Bildung des Materials der Formel (I) geeignet sind.

10. Verfahren nach dem vorhergehenden Anspruch, wobei das Material der Formel (II) die Gesamtheit oder einen Teil einer Elektrode bildet.

11. Verfahren nach einem der Ansprüche 9 und 10, wobei die elektrochemische Reduktion unter Verwendung eines Elektrolytmediums durchgeführt wird, das eine Quelle von Element A umfasst, wobei A vorzugsweise Lithium ist und das Elektrolytmedium eine Lithiumquelle umfasst, insbesondere in Form einer Verbindung, die aus Lithiumhexafluorophosphat $LiPF_6$, Lithiumperchlorat $LiClO_4$, Lithiumarsenat $LiAsO_4$, Lithiumtetrafluoroborat $LiBF_4$, Lithiumbis(trifluormethansulfonimid) LiTFSI, Lithiumbis(oxalato)borat LiBOB, Lithiumbis(fluorsulfonyl)imid LiFSI, Lithiumhexafluoroarsenat $LiAsF_6$, Lithiumtriflat $LiSO_3CF_3$, Lithiumtrifluoracetat $LiCF_3CO_2$, Lithiumhexafluoroantimonat $LiSbF_6$, $LiN(CF_3SO_2)_3$, $LiN(C_2F_5SO_2)$ und Mischungen davon ausgewählt ist.

12. Verfahren nach einem der Ansprüche 9 bis 11, wobei das Material der Formel (III) vor seiner Reduktion durch elektrochemische Oxidation des Aufbauelements M des Materials der Formel (II) erzeugt wird, wobei das Material der Formel (II) vorzugsweise als Arbeitselektrode gegenüber einer Gegenelektrode oxidiert wird,
wobei die Oxidation des Materials der Formel (II) zu Material der Formel (III) und die Reduktion des Materials der Formel (III) zu Material der Formel (I) vorzugsweise in derselben elektrochemischen Zelle durchgeführt werden und/oder
die Oxidation des Materials der Formel (II) zu Material der Formel (III) und die Reduktion des Materials der Formel (III) zu Material der Formel (I) vorzugsweise an einer einzigen Elektrode durchgeführt werden, wobei die Materialien der Formel (II) und (III) aufeinanderfolgend eine Komponente davon sind.

13. Verfahren nach einem der Ansprüche 9 bis 11, wobei das Material der Formel (III) vorher durch chemische Oxidation des Materials der Formel (II) hergestellt wird.

14. Verfahren nach Anspruch 13, wobei bei der chemischen Oxidation mindestens eine oxidierende Verbindung verwendet wird, deren Redoxpotential größer ist als das Redoxpotential des Paars $M^{2+}/M^{3+}$ und/oder des Paars $M^{3+}/M^{4+}$ des Aufbauelements M des Materials der Formel (II), wobei die oxidierende Verbindung vorzugsweise aus Nitroniumtetrafluoroborat $NO_2BF_4$, Kaliumpersulfat $K_2S_2O_8$, Nitrosoniumhexafluorophosphat $NO_2PF_6$, Nitrosoniumtetrafluoroborat $NOBF_4$, Wasserstoffperoxid $H_2O_2$ und Mischungen davon ausgewählt wird, und/oder
die chemische Oxidation in einem flüssigen Bad, das mindestens das Material der Formel (II) und die oxidierende Verbindung enthält, und unter Bedingungen, die zur Extraktion des Elements Z aus dem Material der Formel (II) geeignet sind, durchgeführt wird, um das erwartete Material der Formel (III) zu bilden.

15. Verfahren zur Herstellung zur Herstellung des Materials der Formel (I) nach einem der Ansprüche 1 bis 6, wobei das Verfahren mindestens die folgenden Schritte umfasst, die aus Folgendem bestehen:

a) Bereitstellen:

- eines Materials mit kristallographischer Olivinstruktur und der Formel (II):

$$Z_zM_m(SiO_4)_{1-x}(PO_4)_x$$

wobei die chemischen Elemente Z und M sowie die stöchiometrischen Koeffizienten x und m wie in einem der Ansprüche 1 bis 6 definiert sind, wobei die stöchiometrischen Koeffizienten z' und x so beschaffen sind, dass $0 < z' \leq 1 - \dfrac{x}{2}$, und der stöchiometrische Koeffizient z' so beschaffen ist, dass z' > z, und

- eines Alkalimaterials, das mindestens ein Alkalimetall A, das aus Lithium, Natrium, Kalium und Mischungen davon ausgewählt ist, umfasst,

b) Halten eines flüssigen Bads, das das Alkalimaterial geschmolzen und das Material der Formel (II) in festem Zustand umfasst, vorzugsweise daraus besteht, bei einer Haltetemperatur und über eine Temperaturhaltezeit, die für die Insertion des Alkalimetalls A, das von dem Alkalimaterial bereitgestellt wird, in freie Stellen der kristallographischen Olivinstruktur des Materials der Formel (II) geeignet ist, so dass das Material der Formel (I) gebildet wird,
c) gegebenenfalls Abkühlen des flüssigen Bads und
d) gegebenenfalls Waschen und Trocknen.

16. Verfahren nach dem vorhergehenden Anspruch, bei dem das flüssige Bad durch teilweises Schmelzen einer Ausgangscharge, die aus Teilchen aus dem Alkalimaterial und Teilchen aus dem Material der Formel (II), die vorzugsweise innig gemischt sind, besteht, erhalten wird, wobei das teilweise Schmelzen vorzugsweise bei einer Temperatur über dem Schmelzpunkt des Alkalimaterials und unter der Abbautemperatur des Materials der Formel (II) durchgeführt wird.

17. Verfahren nach einem der Ansprüche 15 und 16, wobei es sich bei dem Alkalimaterial um eine Mischung von $LiNO_3$ und LiCl oder eine Mischung von LiCl und KCl handelt.

**Claims**

1. Material of olivine crystallographic structure and of formula (I)

$$A_aZ_zM_m(SiO_4)_{1-x}(PO_4)_x$$

in which:

- A is chosen from lithium, sodium, potassium and mixtures thereof,
- Z is chosen from beryllium, magnesium, calcium, strontium, barium and mixtures thereof,
- M is chosen from iron, nickel, cobalt, manganese, chromium and mixtures thereof, the degree of oxidation of the element M being greater than or equal to 2 and less than 4,
- a, z, m and x are the stoichiometric coefficients of the chemical elements A, Z and M and of the group $PO_4^{3-}$ respectively, and comply with the following conditions:

○

$$0 < a < 1 - \frac{x}{2},$$

○ 0 < x < 0.8,
○ 0 < m,
○

$$0 < z < 1 - \frac{x}{2},$$

and

$\circ$

$$a + z \leq 1 - \frac{x}{2}.$$

2. Material according to Claim 1, in which the sum of the stoichiometric coefficients a + z + m is equal to 2 - $\frac{x}{2}$.

3. Material according to either one of Claims 1 and 2, in which the stoichiometric coefficients a, z and m are such that

$$z = 1 - a - \frac{x}{2}$$ and/or m = 1.

4. Material according to any one of the preceding claims, in which the stoichiometric coefficient a is greater than

$$0.1 \times (1 - \frac{x}{2}),$$ preferably greater than 0.8 $\times (1 - \frac{x}{2}).$

5. Material according to any one of the preceding claims, in which A consists of more than 99% lithium, as molar percentage expressed relative to the total number of moles of alkali metal constituting A; preferably A is lithium, and/or Z is chosen from magnesium, calcium and mixtures thereof, and preferably is magnesium, and/or M is manganese.

6. Material according to any one of the preceding claims, in which z < 1, preferably z < 0.5, preferably z < 0.1, or even preferably z < 0.05, better still z < 0.01, and/or
x is less than or equal to 0.5, or even less than or equal to 0.4, or even less than or equal to 0.25 and/or greater than 0.05, or even greater than 0.15, in particular equal to 0.2, and/or m is between 0.9 and 1.1, preferably is equal to 1.0.

7. Product comprising, for more than 50.0% of its mass, the material according to any one of the preceding claims, the product preferably being in the form of a powder of primary particles comprising, for more than 95.0% of their mass, the material according to any one of the preceding claims, more than 90.0% by number of the primary particles having a size of less than 100 nm, for example less than 50 nm, for example less than 35 nm,
the primary particles preferably being aggregated or agglomerated together, forming in particular secondary particles, and/or the primary particles being in particular covered, preferably entirely, with a layer of carbon, the thickness of which is in particular less than 10 nm, for example less than 5 nm, for example between 2 nm and 3 nm.

8. Device chosen from a lithium-ion battery cathode, a sodium-ion battery cathode, a potassium-ion battery cathode, a lithium battery cathode, a sodium battery cathode and a potassium battery cathode, the device comprising a product according to Claim 7 or a material according to any one of Claims 1 to 6.

9. Method for producing the material of formula (I) according to any one of Claims 1 to 6, said method comprising at least the steps consisting in:

i. providing a material of olivine crystallographic structure and of formula (III):

$$Z_z M_m (SiO_4)_{1-x} (PO_4)_x,$$

obtained by oxidation of a material of olivine crystallographic structure and of formula (II):

$$Z_{z'} M_m (SiO_4)_{1-x} (PO_4)_x$$

the chemical elements Z and M and also the stoichiometric coefficient z of the material of formula (III) and the stoichiometric coefficients x and m of the material of formula (II) and the material of formula (III) being as defined in any one of Claims 1 to 6, the stoichiometric coefficients z' and x being such that

$$0 \; < \; z' \; \le \; 1 \; - \; \frac{x}{2},$$ the stoichiometric coefficient z' also being such that z' > z, and

ii. electrochemically reducing said material of formula (III) in the presence of an electrode source of element A under conditions suitable for the formation of the material of formula (I).

10. Method according to the preceding claim, in which the material of formula (II) forms all or part of an electrode.

11. Method according to either one of Claims 9 and 10, in which the electrochemical reduction is carried out by means of an electrolytic medium comprising a source of element A, preferably A being lithium, and said electrolytic medium comprising a source of lithium, in particular in the form of a compound chosen from lithium hexafluorophosphate $LiPF_6$, lithium perchlorate $LiClO_4$, lithium arsenate $LiAsO_4$, lithium tetrafluoroborate $LiBF_4$, lithium bistrifluorometh-anesulfonimide LiTFSI, lithium bis(oxalato)borate LiBOB, lithium bis(fluorosulfonyl)imide LiFSI, lithium hexafluoro-arsenate $LiAsF_6$, lithium triflate $LiSO_3CF_3$, lithium trifluoroacetate $LiCF_3CO_2$, lithium hexafluoroantimonate $LiSbF_6$, $LiN(CF_3SO_2)_3$, $LiN(C_2F_5SO_2)$, and mixtures thereof.

12. Method according to any one of Claims 9 to 11, in which the material of formula (III) is, prior to its reduction, generated by electrochemical oxidation of the constituent element M of said material of formula (II), said material of formula (II) preferably being oxidized as working electrode facing a counterelectrode,

the oxidation of the material of formula (II) to give material of formula (III) and the reduction of the material of formula (III) to give material of formula (I) preferably being carried out in one and the same electrochemical cell, and/or the oxidation of the material of formula (II) to give material of formula (III) and reduction of the material of formula (III) to give material of formula (I) preferably being carried out at the level of a single electrode of which said materials of formulae (II) and (III) are consecutively a component thereof.

13. Method according to any one of Claims 9 to 11, in which said material of formula (III) is generated beforehand by chemical oxidation of the material of formula (II).

14. Method according to Claim 13, in which said chemical oxidation uses at least one oxidizing compound, the oxidation-reduction potential of which is greater than the oxidation-reduction potential of the couple $M^{2+}/M^{3+}$ and/or of the couple $M^{3+}/M^{4+}$ of the constituent element M of said material of formula (II), the oxidizing compound preferably being chosen from nitronium tetrafluoroborate $NO_2BF_4$, potassium persulfate $K_2S_2O_8$, nitrosonium hexafluorophos-phate $NO_2PF_6$, nitrosonium tetrafluoroborate $NOBF_4$, hydrogen peroxide $H_2O_2$ and mixtures thereof, and/or said chemical oxidation being carried out within a liquid bath containing at least said material of formula (II) and said oxidizing compound and under conditions suitable for the extraction of the element Z from said material of formula (II) so as to form said expected material of formula (III).

15. Method for producing for producing the material of formula (I) according to any one of Claims 1 to 6, said method comprising at least the successive steps consisting in:

a) providing:

- a material of olivine crystallographic structure and of formula (II)

$$Z_z M_m (SiO_4)_{1-x} (PO_4)_x$$

in which the chemical elements Z and M and also the stoichiometric coefficients x and m are as defined in any one of Claims 1 to 6, the stoichiometric coefficients z' and x being such that

$$0 \; < \; z' \; \le \; 1 \; - \; \frac{x}{2},$$ and the stoichiometric coefficient z' being such that z' > z, and

- an alkali material comprising at least one alkali metal A chosen from lithium, sodium, potassium and mixtures thereof,

b) maintaining a liquid bath comprising, preferably consisting of, the molten alkali material and the material of formula (II) in the solid state, at a maintenance temperature and for a maintenance time at this temperature that are suitable for the insertion of the alkali metal A provided by the alkali material in free sites of the olivine crystallographic structure of the material of formula (II) so as to form said material of formula (I),

c) optionally, cooling the liquid bath, and

d) optionally, washing and then drying.

16. Method according to the preceding claim, in which the liquid bath is obtained by partial melting of a starting feed consisting of particles formed of the alkali metal and of particles formed of the material of formula (II), and preferably intimately mixed, the partial melting preferably being carried out at a temperature above the melting point of the alkali material and below the degradation temperature of the material of formula (II).

17. Method according to either one of Claims 15 and 16, in which the alkali material is a mixture of $LiNO_3$ and LiCl or a mixture of LiCl and KCl.

Fig. 1

Fig. 5

Fig. 2

Fig. 3

Fig. 4

Fig. 6

Fig. 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6085015 A
- US 6514640 B1
- EP 1134826 A1
- US 20120227252 A1

**Littérature non-brevet citée dans la description**

- **M.E. ARROYO ; DE DOMPABLO et al.** Is it possible to prepare olivine-type LiFeSiO4 ? A joint computational an experimental investigation. *Solid State Ionics,* 2008, vol. 179, 1758-1762
- **JIANZHI SUN ; ZHEN JIANG.** Synthesis of MgMnSiO4 and its applications as cathode material for magnesium battery. *J. New Mat. Electrochem. Systems,* 2014, vol. 17, 9-11
- **GEORGE J. JANZ.** Molten Salts Handbook. Academic Press, 1967
- **DE C.N.R. RAO ; KANISHKA BISWAS.** Essentials of Inorganic Materials Synthesis. John Wiley & Sons, 20 Avril 2015
- **DAVID LINDEN ; THOMAS B. REDDY.** Handbook of batteries. McGraw-Hill, 2002
- **DE A. R. WIZANSKY ; P. E. RAUCH ; F. J. DISALVO.** *J. Solid State Chem.,* 1989, vol. 81, 203-207